# EUROPEAN PATENT SPECIFICATION

(11) **EP 1 306 490 B1**
(45) Date of publication and mention of the grant of the patent: **18.08.2010**
(21) Application number: 01926109.8
(22) Date of filing: 01.05.2001
(51) Int. Cl.: E02F 9/00, B60K 11/04, B60K 13/04, B62D 25/08

(54) **SWING OPERATION VEHICLE**
DREHBARE MASCHINE
ENGIN PIVOTANT

(30) Priority: 01.05.2000 JP 2000132263; 01.05.2000 JP 2000132264; 01.05.2000 JP 2000132265; 01.05.2000 JP 2000132266; 01.05.2000 JP 2000132267; 01.09.2000 JP 2000266056
(43) Date of publication of application: 02.05.2003
(73) Proprietor: Yanmar Co., Ltd., Osaka-shi, Osaka 530-0013 (JP); Yanmar Construction Equipment Co., Ltd., Chikugo-shi Fukuoka 833 0055 (JP)
(72) Inventor: OHASHI, Tetsuhiro, Seirei Industry Co., Ltd, Okayama-shi, Okayama 702-8004 (JP); OYAMADA, Yasuyuki, Seirei Industry Co., Ltd., Okayama-shi, Okayama 702-8004 (JP); NOBAYASHI, Takafumi, Seirei Industry Co., Ltd, Okayama-shi, Okayama 702-8004 (JP)
(74) Representative: Henkel, Feiler & Hänzel
(86) International application number: PCT/JP2001/003787
(87) International publication number: WO 2001/083895

(56) References cited:
- EP-A- 0 412 423
- EP-A- 0 743 401
- EP-A- 0 807 720
- EP-A- 0 943 739
- DE-A1- 19 856 375
- GB-A- 2 204 558
- JP-A- 6 212 665
- JP-A- 8 134 954
- JP-A- 8 199 629
- JP-A- 8 326 100
- JP-A- 9 158 249
- JP-A- 9 242 118
- JP-A- 10 183 687
- JP-A- 11 200 413
- JP-A- 11 269 917
- JP-U- 7 042 384
- JP-U- 60 008 743

## Description

### Field of the Invention

The present invention relates to reduction of the internal space of a bonnet which constructs an engine room in a swivel body of a swivel working vehicle, wherein a hydraulically-operated working system such as an excavating working machine is provided on the swivel body, and the swivel body is mounted swivelably in the horizontal direction on a traveling device of the swivel working vehicle. Especially, the present invention relates to arrangement of a hydraulic oil tank for the hydraulically-operated working system mounted on the swivel body and of an engine muffler.

### Background Art

Conventionally, the swivel working vehicle is constructed in such a way that the swivel body, where a hydraulically-operated working system such as an excavating working machine so-called backhoe is provided, is swivelably mounted in the horizontal all directions on the traveling device such as a crawler type and a wheel type. When the swivel body is turned so that the working system is positioned in front of the traveling device in the forward traveling direction, it is necessary for the total lateral width of the swivel body to be set within the lateral width of the traveling device in order to prevent the swivel body from interfering with other things on the left and right sides of the vehicle, which is loaded on a bed of a truck and in usual traveling. Hereafter, references to positions of front, rear, right and left in the swivel body will be given to the corresponding positions on the assumption that the hydraulically-operated working system is located at the front end of the swivel body.

However, if a swollen rear portion of the swivel body becomes too large in compensation for the reduction of the lateral width thereof, the rear portion projects from the traveling device during the swivel motion of the swivel body, so that there is possible that the rear portion contacts obstacles. For example, it is necessary for an excavation work of a street drain near a wall to bring the machine body near the wall. Therefore, even if the backhoe swivels to load earth and sand into a truck which stops on the opposite side of the wall, the excavation work in a narrow place cannot be executed because of impossibility of securing a swivel space for the rear portion of the swivel body. Thus, the swivel body on the traveling device is desirably constructed so as not to cause matters such as the contact with a wall, as described above, by limiting the size of the rear portion of the swivel body so as not to project laterally from the traveling device in swivel motion while the lateral width of the swivel body is reduced.

Known as the construction not to project the rear portion of the swivel body is the arrangement construction that an engine is disposed in the substantially lateral center within the bonnet so as to orient the longitudinal direction of the engine in the fore-and-aft direction of the swivel body, and in the left and right sides of the engine are distributed the hydraulic oil tank for the hydraulically-operated working system and a fuel tank, as indicated in the Japanese Patent Laid Open Gazette Hei. 7-300879, for example.

Moreover; in the Japanese Patent Laid Open Gazette Hei..11-269916, the engine is disposed so as to orient in the longitudinal direction thereof in the left-and-right direction of the swivel body, and in order to keep down the lateral width of the swivel body, an overhang space formed within the rear end portion of the swivel body in rear of the engine is utilized so that the hydraulic oil tank is disposed within the overhang space and a battery is disposed on the hydraulic oil tank.

Especially, it is known for an arrangement of the engine, a hydraulic system, and other peripheral equipments on the swivel body, which is formed arcuately in plan view from the left and right side to the rear end portion of the swivel body, that the longitudinal direction of the engine agrees with the inclined left-and-right direction of the swivel body, the engine is disposed so as to shift from the lateral center of the swivel body, and other peripheral equipments are disposed so as to surround an operator's seat, as indicated in the Japanese Patent Laid Open Gazette Hei. 11-107316.

Furthermore, it is known for an art of forming a duct between an engine radiator and an opening of the bonnet that the hydraulic oil tank for the hydraulically-operated working system is disposed perpendicularly to the radiator, and the side face of the hydraulic oil tank is utilized for a baffle leading to the radiator, as indicated in the Japanese Patent Laid Open Gazette Hei. 8-333772. The hydraulic oil tank also functions as a shield to protect the engine peripheral equipment within the bonnet such as the battery against a radiator air.

Such compaction asks for reduction in size of the engine, a reservoir tank, and the fuel tank, and especially asks reduction of the space occupying within the bonnet, thereby resulting in a decrease in the power output and the working efficiency. When the size and the power output of the engine are increased with a layout such as described in the Japanese Patent Laid Open Gazette Hei. 7-300879 or the Japanese Patent Laid Open Gazette Hei. 11-107316, it is necessary to enlarge the fuel tank and the reservoir tank which are arranged in the bonnet with the engine, resulting in an extension of the swivel body in the left-and-right direction and the rear portion thereof. Moreover, it is not desirable that a relatively large dead space is provided within the bonnet as a duct for the engine radiator, as shown in the Japanese Patent Laid Open Gazette Hei. 8-333772.

It is as the further problem with the compaction that a counterweight is provided in the rear end of the swivel body so as to balance in weight with the hydraulically-operated working system provided in the front end of the swivel body, and the decrease of the rearward projecting volume from the rear portion of the swivel body causes the center of gravity of the swivel body to approach the front of the swivel body so as to increase the weight of the counterweight, thereby increasing the production cost of the counterweight. In order to avoid this problem, a greatly heavy engine is desired to come close to the rear end of the swivel body as much as possible.

In the Japanese Patent Laid Open Gazette Hei. 7-300879, the swivel body is not constructed so that the weight concentrates on the rear portion of the swivel body because the longitudinal direction of the engine agrees with the fore-and-aft direction of the swivel body.

Moreover, in the Japanese Patent Laid Open Gazette Hei. 11-269916, the longitudinal direction of the engine agrees with the left-and-right direction of the swivel body. However, it is impossible to dispose the engine just before the rear end of the swivel body because the hydraulic oil tank is disposed behind the engine.

Therefore, in the layout shown in the Japanese Patent Laid Open Gazette Hei. 11-269916, by removing the hydraulic oil tank behind the engine, the engine is brought rearward and the weight of the rear portion of the swivel body is increased. However, there arises a problem about arrangement of the hydraulic oil tank. If the hydraulic oil tank is to be disposed in the bonnet, the whole space of the bonnet must be expanded.

The above-mentioned problem is solved by arts shown in the Japanese Patent Laid Open Gazettes Hei. 11-81376, Hei. 11-81378, and Hei. 11-81379. That is, the longitudinal direction of the engine agrees with the left-and-right direction of the swivel body so that the engine is disposed extremely close to the rear end of the swivel body, and the hydraulic oil tank in front of the engine is covered by the bonnet and disposed so that the height of the hydraulic oil tank is larger than the size thereof in the horizontal direction.

However, the hydraulic oil tank is positioned in the side of the operator's seat to restrict a space for the operator getting on and off. When making a swivel working vehicle allowing an operator to get on and off from the both sides of the swivel body, an overhang portion, which projects forward from the bonnet covering the hydraulic oil tank, becomes an obstacle. Moreover, since a large capacity of the hydraulic oil tank has to be secured in case of increasing the power output of the hydraulically-operated working system, the above layout leads to the further extension of the bonnet, thereby resulting in an increase of either the lateral width or longitudinal length of the swivel body. The layout of the art disclosed in the Japanese Patent Laid Open Gazette Hei. 11-107316 is also premised on the forward extension of the bonnet in the side of the operator's seat.

Therefore, the layout of the hydraulic oil tank and peripheral equipments of the engine needs a high-level contrivance, in the case that the bonnet is not desired to expand forward while the weight of the rear portion of the swivel body is ensured by the engine and the size of the swivel body is restricted in the lateral direction thereof and the rear portion thereof for ensuring a small swiveling.

Moreover, the fuel tank can change variously in shape, being constructed by a molded resin of the low rigidity because of the light content thereof. By utilizing this molding, in the Japanese Patent Laid Open Gazette Hei. 11-269922 is disclosed the art that the fuel tank is formed in a substantially L-like shape in side view, the standing portion thereof is positioned within the bonnet, and the horizontally long portion is put within a frame constructing the swivel body, the flame being below the bonnet. That is, the space in the flame below the bonnet occupied by the fuel tank is expanded so as to restrict the arrangement space in the bonnet for the fuel tank.

However, the hydraulic oil tank needs the high rigidity because of the heavy content thereof, and is made of a rectangular rigid structure, which is not allowed to change in shape. It is known as a special case that the hydraulic oil tank is integrally molded by a cast frame as the swivel body, as shown in the Japanese Utility Model No. 2584032. However, the hydraulic oil tank is desirably made separate from the frame of the swivel body, when the maintenance, cost, etc. are taken into consideration.

Therefore, it may be considerable to remove the hydraulic oil tank from the inside of the bonnet by disposing the hydraulic oil tank within the space of a frame constructing the swivel body, the flame being below the bonnet. Further, if the engine peripheral equipments in addition to the hydraulic oil tank are arranged well in the bonnet, an extremely compact bonnet may be constructed wherein the lateral width thereof decreases, the rear portion thereof has no rearward projection, and the front portion thereof is not extended forward so as to prevent an operator from getting on and off. However, in such a compact bonnet, gaps among equipments become very short. Especially, there arises a problem about protection of the fuel tank, the battery, etc. against the radiator air and the radiation of heat from the engine.

Moreover, if only the compaction of the bonnet is taken into account but insurance of passages in the engine room for engine cooling wind is neglected, overheat of the engine may happen.

As another high temperature part, an engine muffler (the so-called silencer) must be considered. That is, a certain amount of the dead space must be secured around the muffler in order to prevent the influence of the heat thereof on other parts. Moreover, the muffler is desirably disposed within the swivel body for the purpose of the soundproofing and the protection for the muffler itself. However, it is difficult to dispose the muffler within the swivel body while the foresaid problem which the present invention faces is solved. For example, in the Japanese Patent Laid Open Gazette Hei. 7-158526. a muffler is extended laterally behind the engine whose longitudinal direction agrees with the left-and-right direction of the swivel body. In this arrangement, the dead space around the muffler can be secured. However, left and right corners of the rear portion of the swivel body come to overhang. In order to prevent the rear portion of the swivel body from projecting rearward so as to enable the rearward swiveling of the swivel body, the engine in front of the muffler needs to be disposed undesirably forward in the swivel body, thereby failing to apply the weight of the engine effectively onto the rear portion of the swivel body.

Thus, even if the hydraulic oil tank is arranged well and the compaction of the space within the bonnet become possible, the compaction has many problems. Therefor, it is desired that a compact swivel working vehicle is provided while the problems are conquered and the sufficient power output is secured.

EP-A-0943739 discloses a swivel working vehicle with the features of the preamble portion of claim 1.

### Disclosure of the Invention

The present invention provides a swivel working vehicle according to claim 1. This vehicle includes a swivel body, which is mounted horizontally swivelably on a traveling device and provided thereon with a hydraulically-operated working system, and an engine, which is covered by a bonnet and disposed in a rear portion of the swivel body, assuming that the side end of the swivel body, where the hydraulically-operated working system thereon is provided, serves as the front end of the swivel body, wherein the bonnet space is compacted under such a concept that the lateral width of the swivel body is set within the lateral width of the traveling device, the engine etc. is sufficiently weighs the rear portion of the swivel body while the rearward projecting of the rear portion of the swivel body is prevented for enabling the rearward swivel motion of the swivel body, and the forward extension of the bonnet is prevented so as to enable an operator to get on and off the swivel body through both the left and right sides of the swivel body.

A hydraulic oil tank for the hydraulically-operated working system is disposed below the lower end of the bonnet along one of the left and right side ends of the swivel body in such a way that the longitudinal direction of the hydraulic oil tank agrees with the fore-and-aft direction of the swivel body. By utilizing the space under the bonnet in this way, the lateral width of the swivel body is decreased while ensuring the large capacity of the hydraulic oil tank, and it is not necessary to get the arrangement space for the hydraulic oil tank within the bonnet. As a further effect, in the state that a control valve for the hydraulically-operated working system is usually provided within a front column which is mounted upright on the swivel body in front of the footboard, the distance between the control valve and a reservoir tank may be shortened so as to decrease the flow resistance of the hydraulic oil.

An engine muffler is disposed vertically along the substantially lateral middle of the rearmost end within the rear portion of the swivel body which looks like an arc in plan view, thereby ensuring the compaction of the engine room. That is, the engine muffler is arranged vertically along the substantially lateral middle area in the rear space of the engine room behind the engine, which is extended the most rearward therein, thereby preventing the left and right corners of the rear end of the swivel body from such expansion as to hinder the rearward swivel motion of the swivel body. Also, such an arrangement of the muffler does not require the laterally axial engine arranged in the rear portion of the swivel body to be shifted forward for arrangement of the muffler. Accordingly, while the compaction of the engine room is secured and the engine weighs the rear end of the swivel body effectively, the muffler, the muffler is disposed in the engine room so as to give high soundproof effect.

The muffler is shaped at the rear end surface thereof is shaped so as to fit the rear surface of the swivel body, and is disposed so that a minor axis in an ellipse as the sectional shape of the muffler agrees with the fore-and-aft direction of the swivel body. Accordingly, the space behind the engine becomes short in the fore-and-aft direction while ensuring enough capacity of the muffler. The whole of the muffler may be covered with the thick counterweight so as to enhance the soundproof effect. Further, the above-mentioned second air port may be disposed at the top end thereof below the lower end of the muffler, or disposed in the vertically under portion of the muffler, i.e., at the bottom of the swivel body, so that the noise generated from the muffler is emitted toward the ground and the air passing through the second air port cools the muffler, thereby further enhancing the soundproof effect.

Furthermore, an air cleaner mount is disposed in a space above the vertical muffler behind the engine and an air cleaner is fixedly mounted on the air cleaner mount, thereby ensuring a suitable space for arrangement of the air cleaner within the compact engine room. This space above the muffler is little influenced by the high temperature of the muffler. Further, the space is so close to the engine as to reduce the intake resistance of the engine.

The air cleaner mount may be provided with a bonnet pivot portion for vertical rotation of the bonnet, thereby requiring no additional member for pivoting the bonnet. Further, the air cleaner mount may be fixedly attached to the counterweight so as to be supported more strongly, thereby also increasing the strength of the bonnet pivot portion.

Correspondingly, the bonnet is fixedly provided on the rear thereof with a pivot portion to be pivoted on the air cleaner mount. This pivot portion may be disposed above the rear bottom end of the bonnet so as to prevent the weight of the bonnet from concentrating on the pivot portion. Consequently, the rear bottom end of the bonnet comes lower than the pivot portion so that the space below the air cleaner mounted on the air cleaner mount serves as a free space required for rotation of the rear bottom end of the bonnet. In detail, the air cleaner mount is provided with a first horizontal platy portion for fixture of the swivel body, and with a second horizontal platy portion for fixture of the air cleaner so that the second horizontal platy portion is disposed in the lateral middle of the first horizontal platy portion and higher one step than the first horizontal platy portion. The space under the second platy portion serves as the free space for rotation of the rear bottom end of the bonnet.

Additionally, pivotal shafts for pivoting the bonnet are extended laterally from the respective left and right ends of the second horizontal platy portion above the first horizontal platy portion so as to serve as the bonnet pivot portion on the air cleaner mount. Accordingly, the height of the pivot shafts corresponds to the pivot portion on the bonnet.

The air cleaner mount may be provided with a vertical platy portion curved in plan view, which is shaped so as to fit the inner side surface of the rear end of the swivel body. Accordingly, the air cleaner mount also receives supporting strength of the rear end of the swivel body, thereby being supported more strongly.

These, further and other objects, features and advantages will appear more fully according to the following description based on accompanying drawings.

### Brief Description of the Drawings

Fig. 1 is an entire side view of a swivel working vehicle according to the present invention;
Fig. 2 is a plan view of the same;
Fig. 3 is a front view of the same;
Fig. 4 is a rear view of the same;
Fig. 5 is a left side view of the rear portion of a swivel body 2 showing a rotating state of a bonnet 14;
Fig. 6 is a right side view of the swivel body 2;
Fig. 7 is an exploded side view of a flame constructing the swivel body;
Fig. 8 is an exploded plan view of the same;
Fig. 9 is a plan view of the swivel body showing the inner construction thereof;
Fig. 10 is a left side view of the same;
Fig. 11 is a left side view of the rear inside of the swivel body 2 showing the drive mechanism of a radiator fan 39 in the left side surface of an engine;
Fig. 12 is a rear view of the swivel body 2 showing the inner construction thereof;
Fig. 13 is a right side view partly in section of the same;
Fig. 14 is a right side view partly in section of the swivel body 2 showing an arrangement construction of a masking shield 50 therein;
Fig. 15 is a side view of the masking shield 50;
Fig. 16 is a plan view of the same;
Fig. 17 is an expanded plan view of the rear portion of the masking shield 50 within the swivel body 2;
Fig. 18 is a right side view partly in section of the same;
Fig. 19 is a right side view partly in section of the swivel body 2 showing a supporting structure of the bonnet 14 by the masking shield 50;
Fig. 20 is a plan view partly in section of the swivel body 2 showing the flow of radiator air therein;
Fig. 21 is a left side view partly in section of the same;
Fig. 22 is a plan view of a rear portion of the swivel body 2 showing an arrangement construction of a muffler 40 therein;
Fig. 23 is a rear view of the swivel body 2 showing an arrangement construction of an air cleaner 41 and the muffler 40;
Fig. 24 is an expanded rear view of an arrangement portion of the air cleaner 41 in the upper portion of a counterweight portion 77;
Fig. 25 is a plan view of an air cleaner mount 71;
Fig. 26 is a rear view of the same;
Fig. 27 is a left side view of the same;
Fig. 28 is a perspective view of a hinge 81 fixed to the bonnet 14;
Fig. 29 is a front view of the hinge 81;
Fig. 30 is a plan view of the same; and
Fig. 31 is a left side view of the same.

### Best Mode for Carrying out the Invention

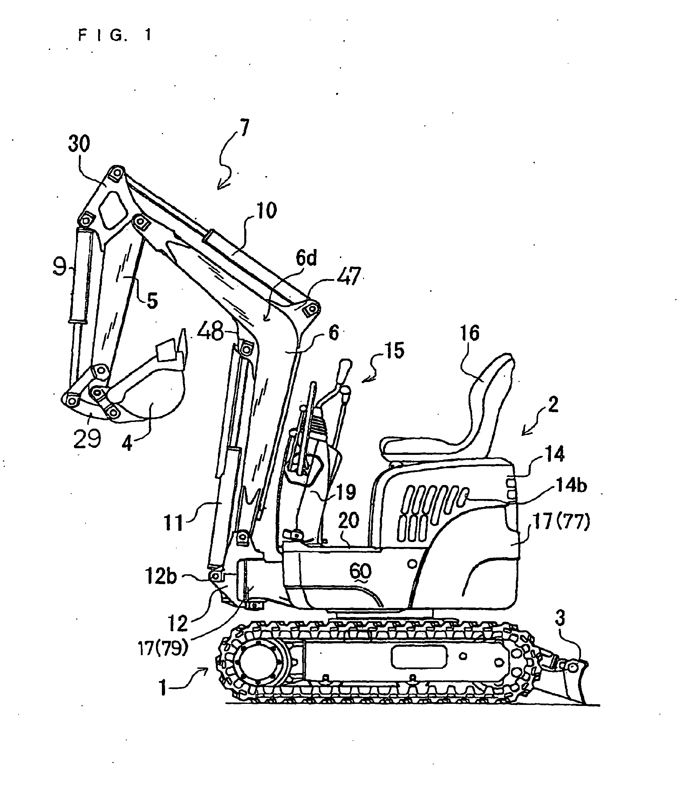

Explanation will be given of a general construction of a swivel working vehicle according to the present invention based on the appearance thereof by using Figs. 1-6 inclusive.

The swivel working vehicle is constructed in such a way that a swivel body 2 is supported in the center of the upper portion of a crawler type traveling device 1 so as to swivel horizontally, and a vertically rotatable blade 3 is provided in one of front and rear end portions of the crawler type traveling device 1. Alternatively, a wheel type traveling device may replace the traveling device 1.

A bonnet 14 which covers an engine etc. is provided in the rear portion of the swivel body 2, and a seat 16 is attached above the bonnet 14. In front of the seat 16 is disposed a control portion 15, which is constructed in such a way that levers for operation of traveling etc. are provided in a front column 19. A footboard 20 is disposed between the front column 19 of the control portion 15 and the bonnet 14.

In one end portion of the swivel body 2 is disposed a hydraulically-operated working system 7 (hereinafter referred to as "working machine") comprising a boom 6, an arm 5, and a bucket 4. The working machine 7 constitutes an excavation working system (backhoe) since the bucket 4 is installed as a working attachment in this embodiment. Alternatively, another hydraulically-operated working system such as a drill, a crane, etc. may be installed.

Hereafter, when any of positions of front, rear, right and left in the swivel body 2 is referred to, it is assumed that the seat 16 faces forward regardless of the position of the swivel body 2 in relation to the traveling device 1. That is, explanation will be given assuming that the working machine 7 is installed in the front end of the swivel body 2.

Explanation will be given on the working machine 7. A boom bracket 12 is horizontally rotatably attached to the front end portion of the swivel body 2 so as to support the lower end portion of the boom 6 vertically rotatably.

The boom 6 is bent forward at the intermediate portion thereof, and formed in a substantially "dogleg" shape in side view containing a bent 6a. The arm 5 is vertically rotatably supported in the upper end portion of the boom 6, and the bucket 4 as the working attachment is vertically rotatably supported in the utmost end of the arm 5.

The boom 6 is rotated vertically in relation to the boom bracket 12 by a boom cylinder 11, the arm 5 is rotated vertically in relation to the boom 6 by an arm cylinder 10, and the bucket 4 is rotated vertically in relation to the arm 5 by a bucket cylinder 9.

The boom cylinder 11, the arm cylinder 10, and the bucket cylinder 9 are hydraulic cylinders, which are respectively driven in telescopic motion by the supply of pressure oil from the hydraulic pump provided within the bonnet 14 of the swivel body 2 through hydraulic oil hoses.

As shown in Fig. 1, the boom cylinder 11 is interposed between a cylinder support 12b of the boom bracket 12 and a boom cylinder bracket 48 provided on the front surface of the intermediate portion of the boom 6, the arm cylinder 10 is interposed between an arm cylinder bottom bracket 47 provided on the rear surface of the intermediate portion of the boom 6 and a bucket cylinder bracket 30 provided in the base end portion of the arm 5, and the bucket cylinder 9 is interposed between the bucket cylinder bracket 30 and a bucket bracket 29 connected with the bucket 4.

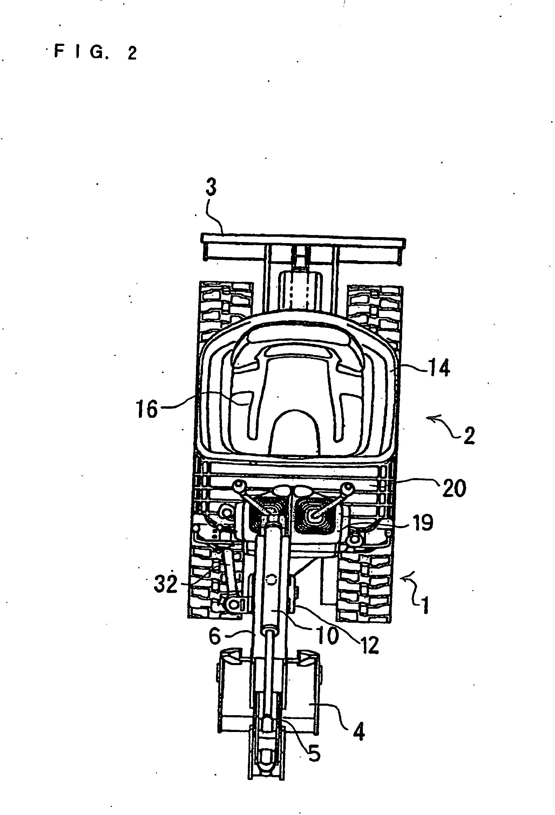

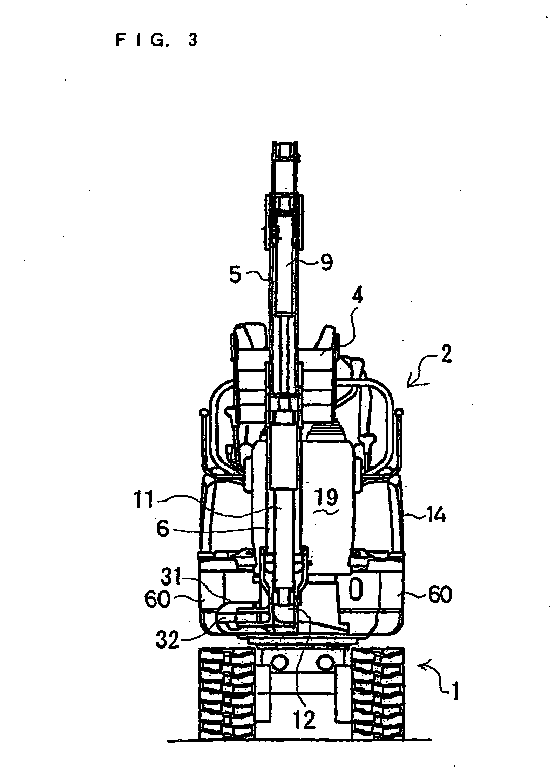

As shown in Figs. 2 and 3, in the lower portion of the swivel body 2 is provided an opening 31, and therefrom protrudes a cylinder rod of a swing cylinder 32 which is an actuator to rotate the working machine 7 horizontally. The rear end of the swing cylinder 32 is pivotally supported by a frame 17 constituting the swivel body 2, and the utmost end of the cylinder rod of the swing cylinder 32 is connected with the boom bracket 12 so that the boom bracket 12 is swung in the left and right direction against the swivel body 2 by the swing cylinder 32.

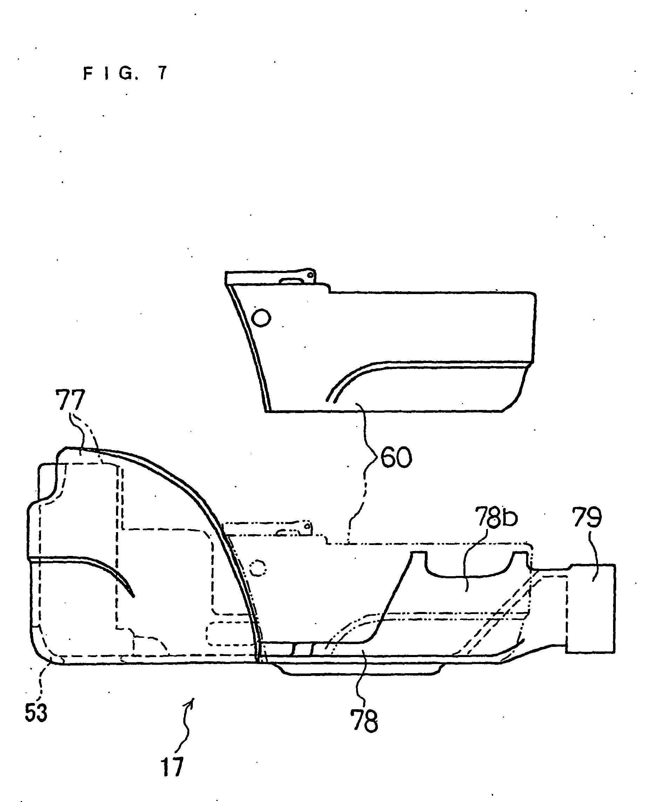

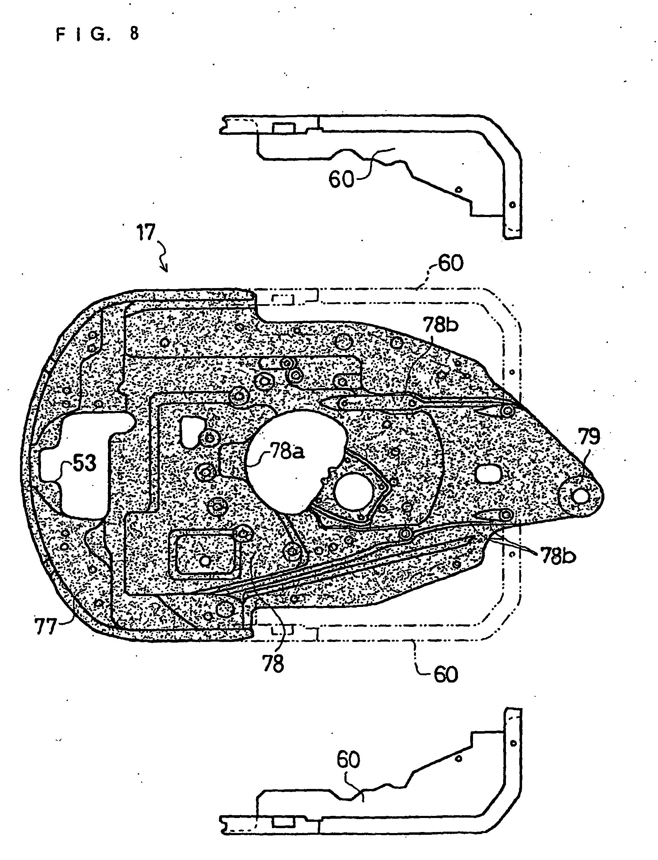

Explanation will now be given on a frame structure constituting the swivel body 2 in accordance with Figs. 7 and 8. The frame 17 is made by casting so as to integrally include a counterweight portion 77 in the rear portion thereof, a boom bracket pivotal support 79 in the front portion thereof, and a mounting portion 78 in the center of the frame 17 connecting the counterweight portion 77 and the mounting portion 78 to each other.

The boom bracket pivotal support 79 is a portion which pivotally supports the boom bracket 12 horizontally rotatably.

The mounting portion 78 is formed substantially in a shape of a horizontal plate so as to serve as a bottom surface of the swivel body 2, and various devices such as a later-discussed engine are mounted on the mounting portion 78. An opening 78a is provided in the center portion of the mounting portion 78 so that a later-discussed swivel joint 36 is disposed therein. A pair of left and right ribs 78b like vertical plates are integrally molded on the front portion of the mounting portion 78 so as to extend in the substantial fore-and-aft direction, thereby increasing the support strength of the boom bracket pivotal support 79. The footboard 20 and the front column 19 are supported over the ribs 78b,

The counterweight portion 77 is constructed thickly in order to be used as a balance weight of the swivel body 2. The counterweight portion 77 is provided between the lower rear surface thereof and the rear bottom surface thereof with a rear lower opening 53. The rear lower opening 53 is provided in the substantially lateral middle of the rear bottom portion of the counterweight portion 77 so as to serve as an air port, from which a vertical opening is formed upward for arranging a muffler 40 therein as discussed later. The rear end of the vertical opening is thinly constructed.

Side frames 60, as members which are separate from the frame 17, are joined to both side edges of the mounting portion 78 of the frame 17, respectively. The side frame 60 is made of economic synthetic resins or FRP. In this embodiment, the swing cylinder 32 and a hydraulic oil tank 43 are covered with respective side frames 60 as mentioned later. In addition, the footboard 20 is joined to the upper ends of the side frames 60 so as to be laid over them.

In this way, while the front portion of the frame 17, on which the boom bracket pivot support 79 is constructed, is narrow, the rear portion of the frame 17, on which the counterweight portion 77 is constructed, is wide, thereby weighing the rear portion relatively heavily. Thus, the shape of the frame 17 is also contrived so as to weigh the rear portion thereof.

The swivel body 2 is constructed such a way that the front column 19, the footboard 20, and the bonnet 14 are mounted in order from the front portion of the frame 17 on the frame 17 joined with the side frame 60.

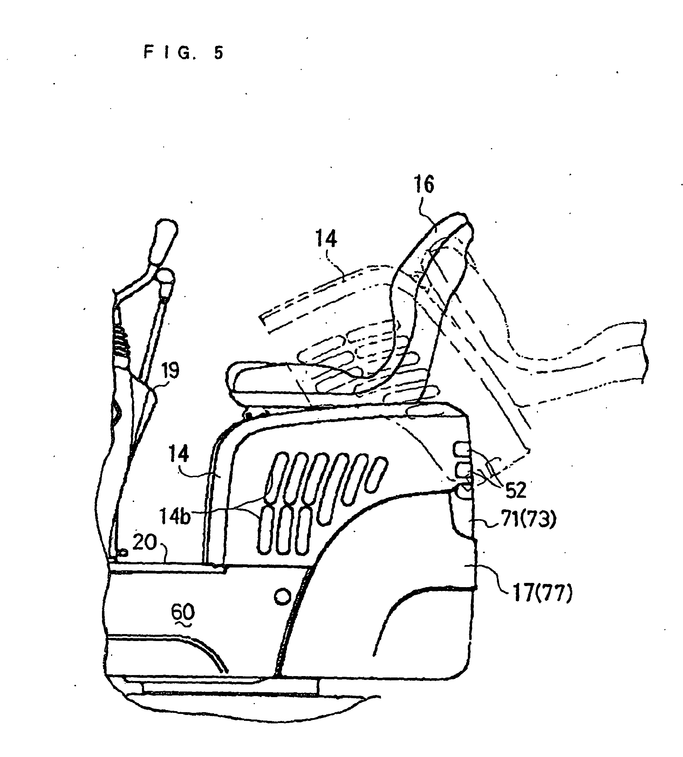

As shown in Fig. 5, the rear lower portion of the bonnet 14 is vertically rotatably connected to the rear upper portion of the frame 17, that is, the upper of the counterweight portion 77. Thus, the bonnet 14 is vertically (forward and backward) rotatable centering on the rear lower portion thereof so that the front end of the bonnet 14 serves as a freely rotatable end thereof.

The bonnet 14, when being closed, is latched by a stopper or the like in the position where the front lower end of the bonnet 14 is contacted with the footboard 20, so as to be held in the closing state. Then, when an engine etc. is maintained, the stopper is removed and the bonnet 14 is rotated rearward like the virtual line of Fig. 5 so as to open the engine room therein.

In the swivel body 2 constructed as the above, the left and right side surface portions thereof, which comprise the frame 17, the bonnet 14, and left and right side frames 60, are disposed in parallel to each other so that the swivel body 2 is as short as possible in the lateral width, that is, located within the lateral width of the traveling device 1. On the other hand, the rear portion of the swivel body 2, which comprises the rear portion of the bonnet 14 and the counterweight portion 77 of the frame 17, is generally constructed in the shape of an arc, whose center is located in the swivel joint 36 serving as a pivotal support for horizontal swiveling of the swivel body 2 in relation to the traveling device 1, in plan view as shown in Fig. 2. In addition, the swivel body 2 is constructed so that the interval (swiveling radius) between the swivel joint 36 and the substantially lateral middle of the rear end of the swivel body 2 is substantially equal to the interval between the swivel joint 36 and each of the left and right corners of the rear end of the swivel body 2, thereby preventing the left and right corners of the re ar end of the swivel body 2 from projecting from the traveling device 1 in rearward swivel motion. Therefore, the swivel body 2 is formed on the whole in the shape of a square excepting that only its rear side overhangs arcuately in plan view.

In order to secure a passage for engine cooling air and radiator air within the engine room of the swivel body 2, a side surface opening 14b is provided in one side of left and right (the left side in this embodiment) of the swivel body 2 as an air port, while a rear upper opening 52 and a rear lower opening 53 are provided in the rear portion of the swivel body 2. Moreover, an air intake opening 14c is provided in the other side of left and right (the right side in this embodiment) of the swivel body 2 as an engine air intake

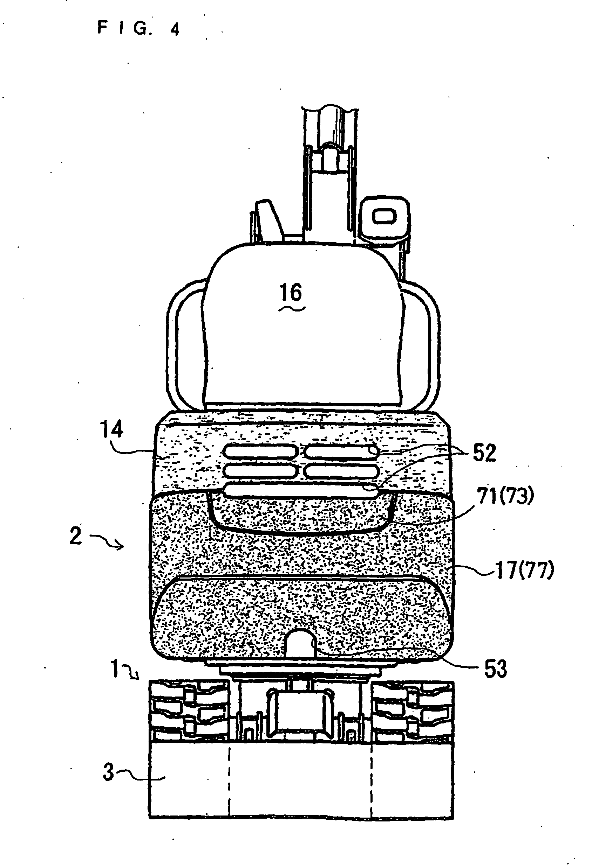

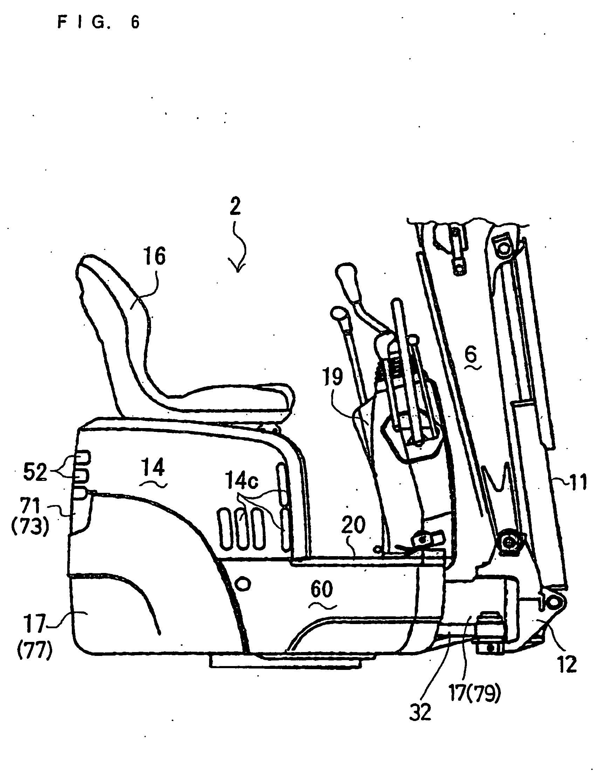

The side surface opening 14b is formed in one side surface of the bonnet 14 (the left side surface in this embodiment) as shown in Figs. 1-5 inclusive. The later-discussed radiator 38 is disposed so as to face the inside of the side surface opening 14b. As shown in Fig. 4, the rear upper opening 52 is provided in the rear end of the bonnet 14 above the counterweight portion 77 of the frame 17, and the rear lower opening 53 is provided in the rear lower portion of the counterweight portion 77 as mentioned above. The air intake opening 14c is formed in the other side surface of the bonnet 14 (the right side surface in this embodiment) as shown in Fig. 6.

In this embodiment, a radiator fan of an air intake structure introduces the outside air into the engine room, which is formed within the bonnet 14 and the frame 17, from the side surface opening 14b, so as to exhaust it from the rear upper opening 52 and the rear lower opening 53. Reversely, it is also all right if the outside air may be introduced into the engine room from the rear upper opening 52 and the rear lower opening 53, and exhausted from the side surface opening 14b by a radiator fan of an air exhaust structure.

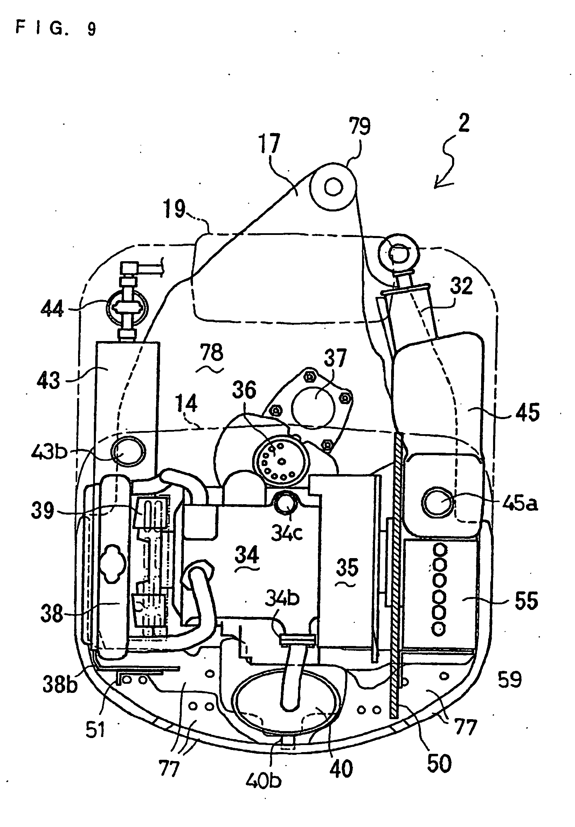

Next, explanation will be given on the inner construction of the swivel body 2 in accordance with Figs. 9-14.

As shown in Fig. 9, the swivel joint 36 is connected at the center thereof with the swivel joint 36, and near the swivel joint 36 is provided a swivel motor 37 for swiveling the swivel body 2 horizontally in relation to the traveling device 1. The swivel motor 37 is fixed to the frame 17.

As shown in Figs. 9, 10, 12 etc., in the rear of the swivel joint 36 within the swivel body 2, an engine 34 is mounted on the horizontal surface (mounting portion 78) of the frame 17 through a strut mount, a laminating rubber, or another vibration proof member so that the axial direction of the crankshaft, that is, the longitudinal direction of the engine 34 agrees with the left-and-right direction of the swivel body 2.

As shown in Figs. 9, 12, and 14, a flywheel housing 35 is provided on one side portion (the right side in this embodiment) of the engine 34, and a hydraulic pump 35a is connected to the crankshaft end, which is positioned at the outside (the right side) of the flywheel housing 35, so as to be driven by the engine 34.

Through hydraulic oil hoses, control valves within the front column 17, etc., the hydraulic pump 35a is connected to the hydraulic system comprising the swing cylinder 32, the swivel motor 37, the swivel joint 36, and the cylinders 9-11, etc., and supplies hydraulic oil thereto respectively. In addition, the hydraulic pump 35a supplies hydraulic oil to HST for the traveling drive and an actuator for driving the blade 3 through the swivel joint 36.

As a source of hydraulic oil supply to the hydraulic pump 35a and a drain point from each hydraulic circuit, the hydraulic oil tank 43 is fixed on the horizontal plane of the frame 17 (mounting portion 78) on either left or right side (the left side in this embodiment) opposite to the flywheel housing 35 and the hydraulic pump 35a within the swivel body 2. The hydraulic oil tank 43 is provided below the bonnet 14 along the left side end of the swivel body 2, that is, the side frame 60 so as to be longer in the fore-and-aft direction. In plan view as shown in Fig. 9, from the bonnet 14 is protruded the front portion of the hydraulic oil tank 43, and the upper surface thereof is covered by the footboard 20 in front of the bonnet 14. Moreover, as shown in Fig. 9, the hydraulic oil filter 44 is provided in front of the hydraulic oil tank 43 below the footboard 20. In this way, the hydraulic oil tank 43 is provided below the bonnet 14 so that the arrangement space of the hydraulic oil tank 43 is deleted from the inner space of the bonnet 14. In addition, the hydraulic oil tank 43 is remarkably protruded forward from the front end of the bonnet 14 so as to secure the large capacity and be accommodated to large power output or many hydraulic equipments. The hydraulic oil tank 43 enables the distance from the control valve arranged within the front column 19 to be shortened. Furthermore, the hydraulic oil tank 43 is protected and hidden in appearance by the covering of the footboard 20.

As shown in Figs. 9-12 inclusive, the bottom surface of the radiator 38 is attached to the upper surface of the rear portion of the hydraulic oil tank 43 through the vibration proof member so that the radiator 38 is mounted upright in the bonnet 14. In this way, it is possible to provide the radiator 38 extremely close to the side surface opening 14b in the side surface of the bonnet 14 by utilizing the space within the bonnet above the hydraulic oil tank 43 effectively. The radiator 38 is put within the upper surface of the hydraulic oil tank 43 in plan view, resulting in the restriction on extension of the lateral width of the swivel body 2.

Moreover, the vibration proof member prevents the vibration of the hydraulic oil tank 43 caused by vibration of the engine 43, the traveling device 1, etc. from being propagated to the radiator 38.

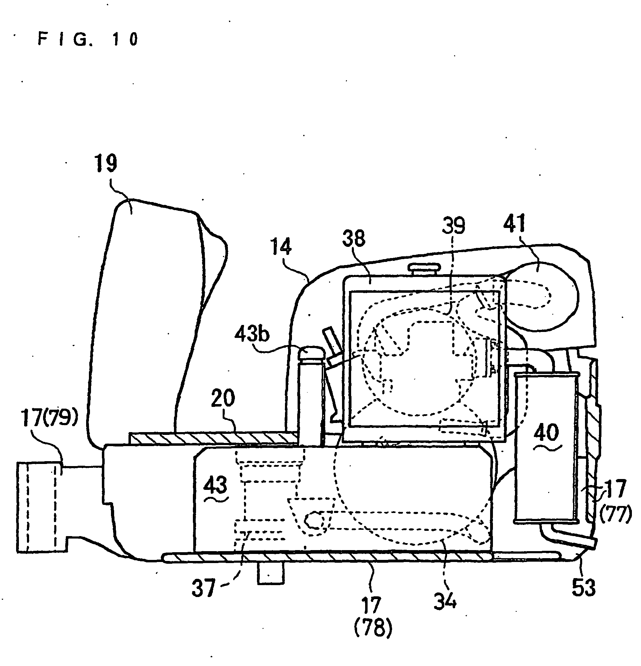

The hydraulic oil tank 43 and the radiator 38 thereon are constructed in a substantially L-like shape in side view, which is in a laterally reversal L-like shape in left side view as shown in the Fig. 10. Therefore, the rear ends of the hydraulic oil tank 43 and the radiator 38 are vertically aligned in a substantial straight line so that no useless space remains behind them.

The attachment structure of the radiator 38 and the structure of an air intake duct formed between the radiator 38 and the side surface opening 14b will be detailed later.

As shown in Fig. 10, an oiling port 43b projected upward is provided on the upper surface of the hydraulic oil tank 43 so that hydraulic oil may be refilled through the oiling port 43b.

In the bonnet 14, the oiling port 43b of the hydraulic oil tank 43 is disposed along the front end of the bonnet 14, which is a riser portion thereof, and the radiator 38 is provided just behind the oiling port 43b. Thus, the oiling port 43b is provided by utilizing the dead apace between the radiator 38 and the front end of the bonnet 14 effectively. The oiling port 43b is positioned in height near the substantially vertical middle of the bonnet 14. Therefore, since the oiling port 43b is higher than the footboard 20, the dust on the footboard 20 does not invade within the oiling port 43b. In addition, the labor of an operator is decreased when refilling hydraulic oil.

As mentioned above, in the bonnet 14, the radiator 38 is provided on one side (the left side) of the engine 34 which is opposite to the side of the engine 34 connected to the hydraulic pump 35a. A radiator fan (hereinafter referred to as "fan") 39 is disposed between the engine 34 and the radiator 38.

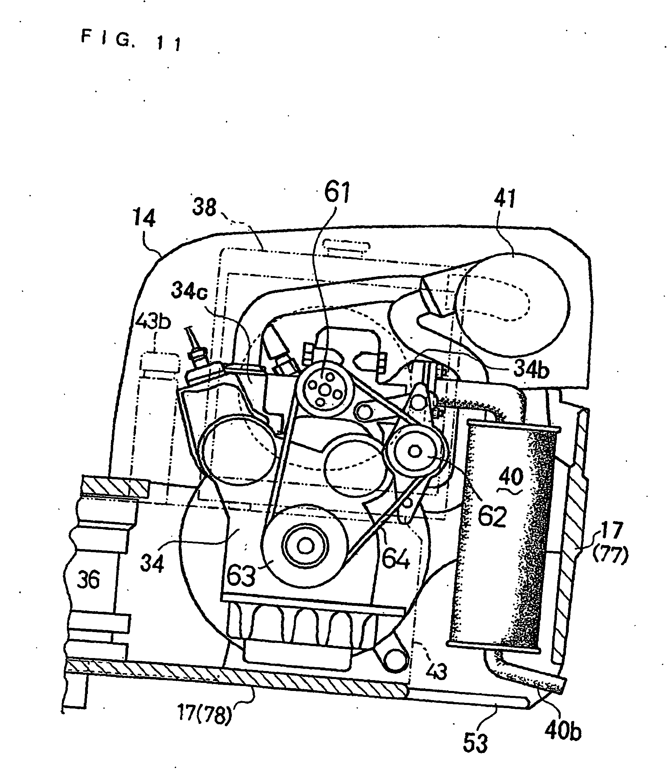

The fan 39 is fixed to a pulley 61 shown in Fig. 11, which is connected with a pulley 63 fixed to the output shaft end of the engine 34 throu gh a belt 64. The fan 39 is driven by the drive of the pulley 61 provided in the upper side portion of the engine 34, and introduces the outside air into the radiator 38 from the side surface opening 14b so as to cool engine-cooling water and send the exhaust air from the fan 39 after passing through the radiator 38 to the upper portion of the engine 34 as engine-cooling air. An engine cylinder, a cylinder head, an exhaust port, etc. are provided in the upper portion of the engine 34, and these heat portion of the engine 34 can be effectively cooled by the cooling air introduced by the fan 39.

The radiator 38 is disposed at one of the left and right sides (the left side in this embodiment) of the fan 39 so that the arrangement position of the radiator 38 overlaps with the arrangement position of the fan 39 in side view, thereby shortening the distance between the radiator 38 and the engine 34.

Explanation will now be given on the arrangement construction of a fuel tank 45 and the swing cylinder 32 in the swivel body 2.

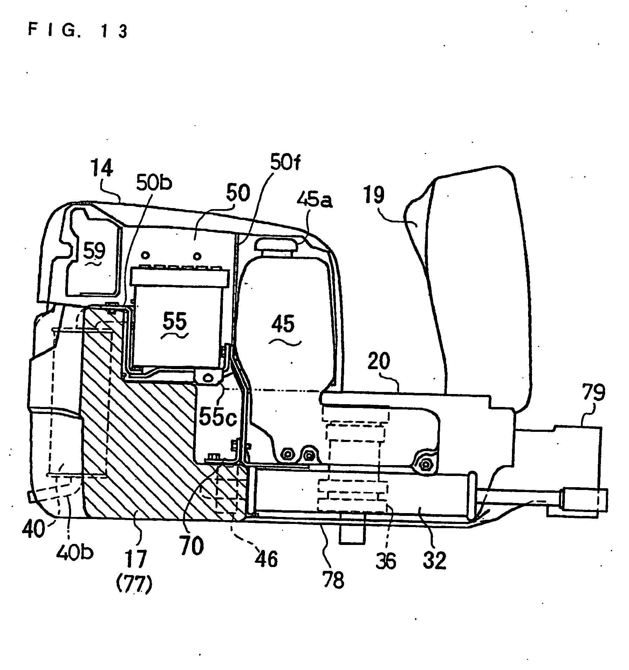

In the swivel body 2, the fuel tank 45 is disposed laterally opposite to the hydraulic oil tank 43. As shown in Fig. 13, the fuel tank 45 is formed in an L-like shape in side view by molding resin etc. The forward projecting lower portion of the fuel tank 45 is disposed below the bonnet 14 and the front lower portion thereof is disposed along the under surface of the footboard 20. The riser portion of the fuel tank 45 is formed along the riser portion of the bonnet 14, that is, the inner side surface of the front end of the bonnet 14. In this way, since for arrangement of the fuel tank 45 is utilized the space in front of the bonnet 14 below the bonnet 14 as well as the inner space of the bonnet 14, a large capacity of the fuel tank 45 is secured while expansion of the bonnet 14 for arrangement of the fuel tank 45 is restricted as well as possible.

A refueling port 45a is provided on the upper surface of the fuel tank 45. As mentioned above, the riser front end portion of the bonnet 14 is positioned on the open side of the bonnet 14 whose rear end is a fulcrum, so that there is no obstacle above the refueling port of the fuel tank 45 when the bonnet 14 is rotated rearward to open the engine room, thereby facilitating refueling work.

As shown in Figs. 9, 13, and 14, the swing cylinder 32 is disposed in the substantially fore-and-aft direction along the right side end of the swivel body 2 (that is, the right side frame 60) below the fuel tank 45.

A pivotal shaft 46 is fitted into the rear end of the swing cylinder 32 so as to be laterally rotatable around the pivotal shaft 46. The upper and lower ends of the pivotal shaft 46 are fixedly fitted into the respective holes formed in the frame 17.

A tip of a cylinder rod of the swing cylinder 32 is connected with the boom bracket 12 so that the swing cylinder 32 actuates to rotate the boom bracket 12 laterally.

For arrangement of the swing cylinder 32 is utilized the space above the horizontal plane (the mounting portion 78) of the frame 17 within the swivel body 2 below the bonnet 14. The position of the swing cylinder 32 is laterally opposite to the hydraulic oil tank 43 within the swivel body 2. Therefore, the hydraulic oil tank 43 and the swing cylinder 32 are distributed left and right, thereby resulting in good lateral weight balance of the swivel body 2.

Moreover, as shown in Figs. 9-13 inclusive, a battery 55 is disposed just behind the above-mentioned riser portion of the fuel tank 45 within the bonnet 14, and electric equipment parts are disposed above the upper surface of the counterweight portion 77 just behind the battery 55 (the electric equipment parts are mounted on a later-discussed masking shield 50).

In this way, the fuel tank 45 (exactly the riser portion thereof) and the battery 55 is disposed along the right side surface of the bonnet 14, and the radiator 38 is disposed along the left side surface of the bonnet 14. Each of them is exposed outside when opening the bonnet so as to ensure a good maintainability.

Moreover, within the bonnet 14, they are disposed so as to be substantially stored within the full longitudinal length of the engine 34 which is disposed so as to set the axis of the crankshaft thereof in the left-and-right direction. Further, as mentioned above, the rear end of the hydraulic oil tank 43 below the radiator 38 is disposed in the substantially same position with the rear end of the radiator 38 in the fore-and-aft direction.

Therefore, there is no member which is projected rearward from the rear end of the engine 34 among these peripheral equipments, so that it becomes possible to dispose the engine 34 extremely close to the rear end (the counterweight portion 77 of the frame 17) of the swivel body 2, whose rear end is brought as frontward as possible for enabling the rearward swivel motion. Consequently, the weight of the engine is effectively added to the weight of the rear end portion of the swivel body 2, so that the good weight balance of the swivel body 2 in the fore-and-rear direction between the rear end portion thereof and the front end portion thereof on which the working machine 7 is arranged is maintained without increasing the weight of the counterweight portion 77, thereby contributing to the cost reduction.

On the other hand, in cooperation with the above-mentioned arrangement of the hydraulic oil tank 43 below the bonnet 14, the bonnet 14 is disposed at the front end thereof close to the front end of the engine 34 and has no forwardly projecting portion bedside the seat 16, so that the footboard 20 is laid to reach the left and right side ends of the swivel body 2 while ensuring a sufficient space in the fore-and-aft direction. Thus, an operator can get on and off the swivel body 2 through both the left and right sides thereof.

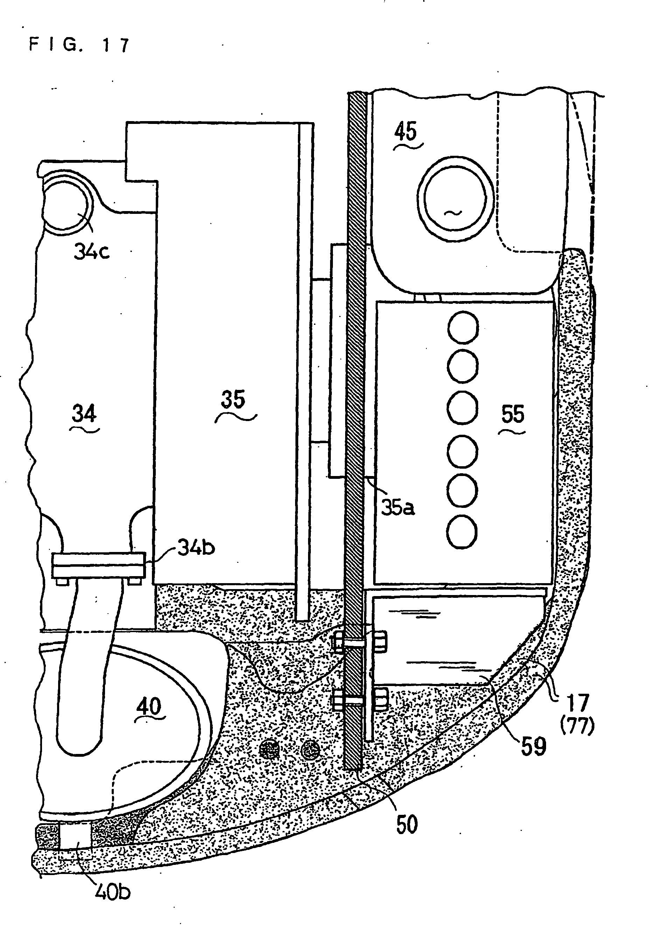

Explanation will now be given on the construction of the masking shield 50, the arrangement construction thereof within the bonnet 14, and the arrangement construction of parts of the fuel tank 45 and others relevant to the masking shield 50 in accordance with Figs. 9, 12-20 inclusive.

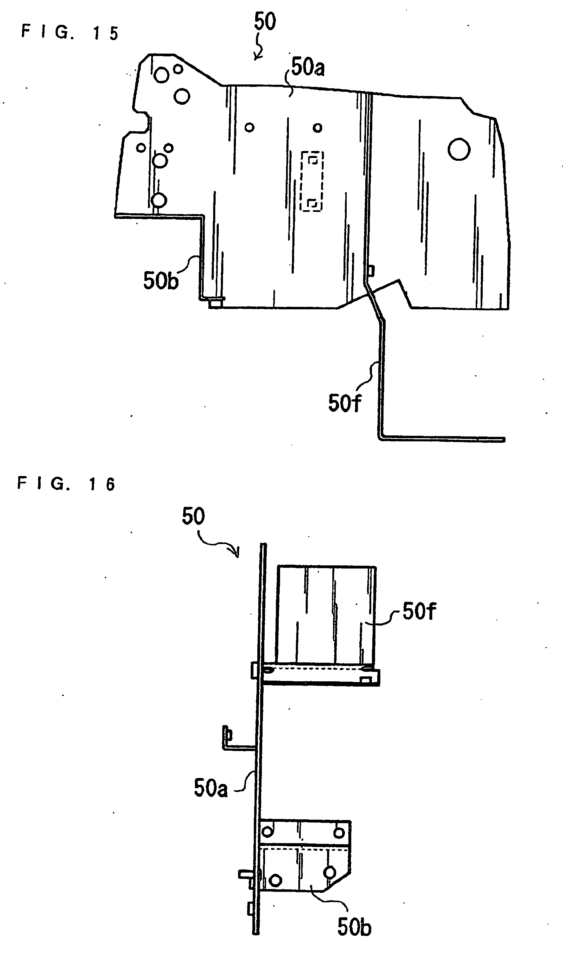

As shown in Figs. 15 and 16, the masking shield 50 is constructed such a way that to a main plate 50a for partitioning the inside of the bonnet 14 into right and left sections are integrally attached a front stay 50f and a rear stay 50b which are perpendicular to the main plate 50a.

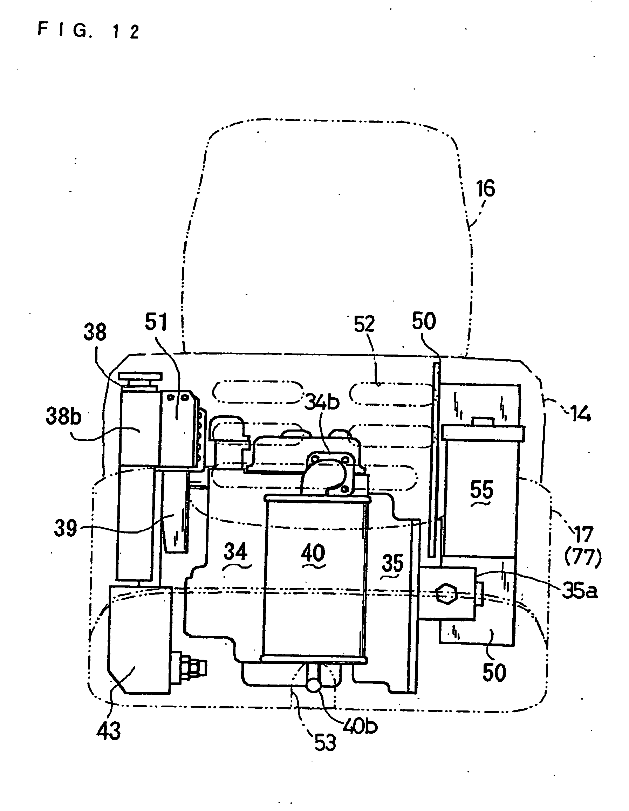

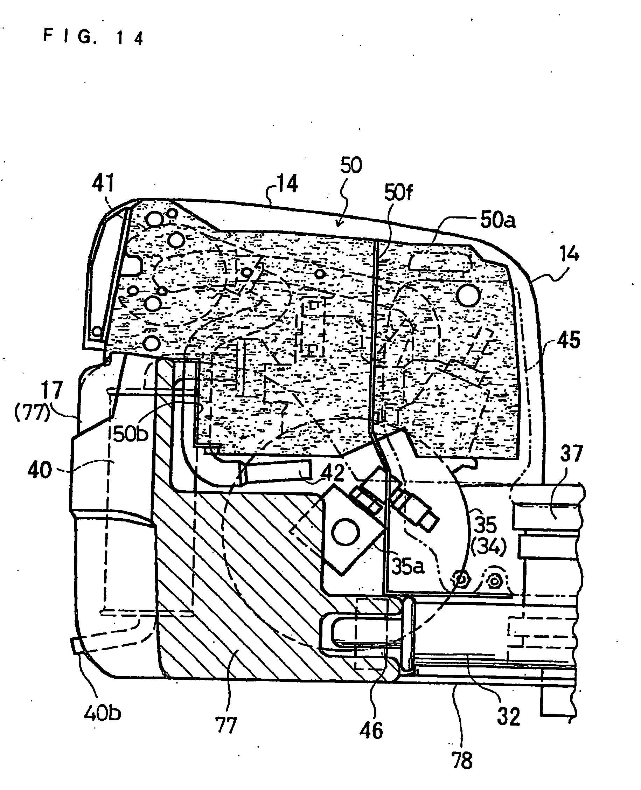

In disposing such the masking shield 50 within the bonnet 14, as shown in Fig. 14, the main plate 50a in the shape of a vertical plate is provided in the fore-and-aft direction above the hydraulic pump 35a along the left side surface of the fuel tank 45 and the battery 55, which are aligned before and behind along the right side surface of the bonnet 14. As shown in Figs. 9 and 12, the main plate 50a partitions the inside of the bonnet into right and left sections so as to isolate the fuel tank 45 and the battery 55 from the engine 34.

The front stay 50f is substantially L-like shaped in right side view, and a bending portion thereof is bolted to the counterweight portion 77 of the frame 17 through an L-like shaped stay 70, as shown in Fig. 13. The front stay 50f is fitted onto the rear end surface and the rear bottom surface of the fuel tank 45, and the horizontal platy portion of the bottom portion thereof is extended as a partition between the rear end portion of the fuel tank 45 and the base end portion of the swing cylinder 32. The substantially vertical platy portion is extended as a partition between the fuel tank45 and the battery 55 behind thereof, and comprises the rear battery and the front stay 50f.

To the upper end horizontal surface of the counterweight portion 77 of the frame 17 is bolted the rear upper portion of the rear stay 50b, and the lower portion of the rear stay 50b is bolted to the rear end of a battery holder 55c. To the front stay 50f is bolted the front end of the battery holder 55c, on which the battery 55 is mounted.

As shown in Figs. 13, 17, and 18, an electric equipment part mounting stay 59 is attached to the main plate 50a of the masking shield 50 by bolting or the like above the upper end horizontal surface of the counterweight portion 77 of the frame 17 in the rear of the battery 55, and electric equipment parts, such as a fuse and a current limiter, are attached to the electric equipment part mounting stay 59.

In this way, the fuel tank 45, the battery 55, and electric equipment parts are protected from the radiation of heat of the engine 34 and the radiator air by the main plate 50a of the masking shield 50, and the battery 55 is protected from the fuel leak from the fuel tank 45 by the front stay 50f of the masking shield 50.

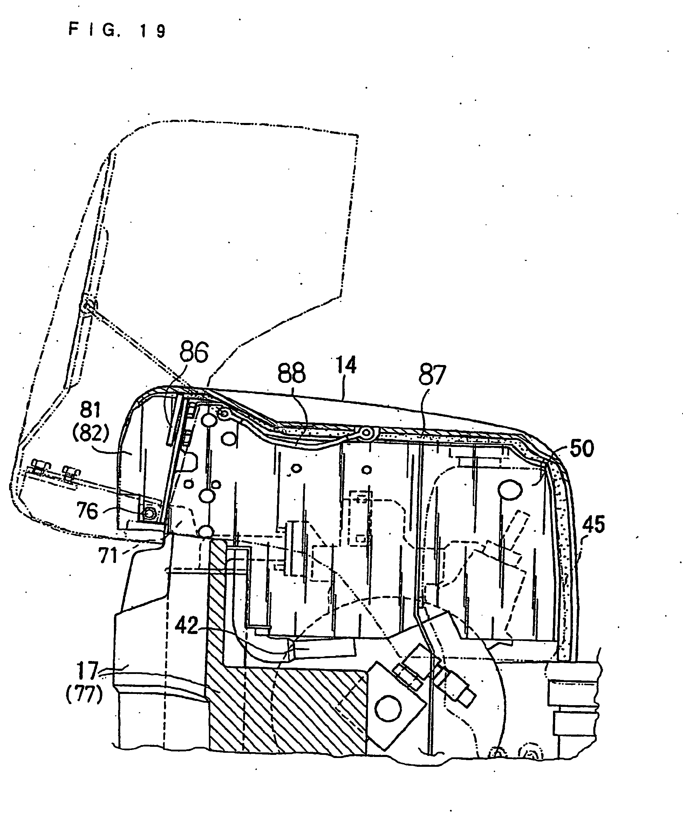

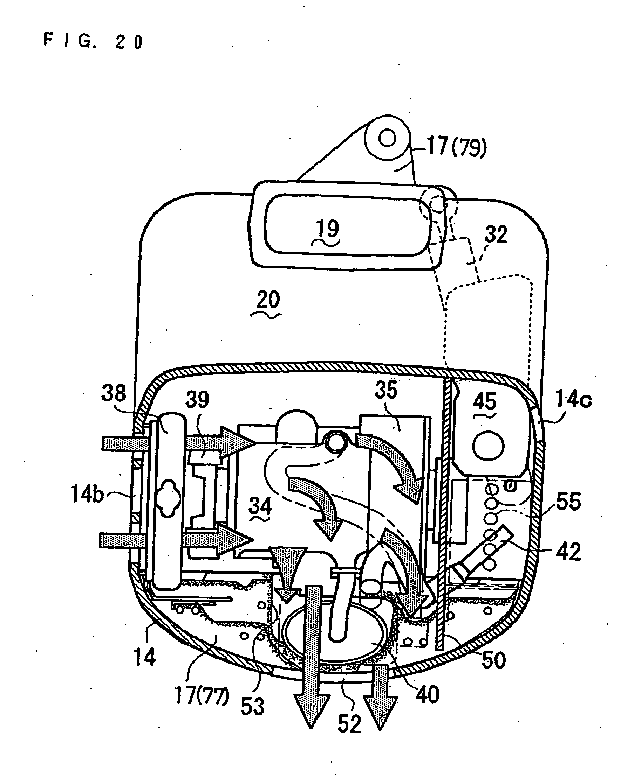

Moreover, as shown in Figs. 19 and 20, an air intake 42 of an air cleaner 41 besides the fuel tank 45, the battery 55, etc. is provided in the space isolated from the engine 34 by the masking shield 50 within the swivel body 2.

As discussed later, the air cleaner 41 is provided in the upper portion of the substantially lateral center behind the engine 34, that is, in the bonnet 14 on the left side of the masking shield 50, and the air intake 42 of the air cleaner 41 is extended into a lower space of the battery 55 on the right side of the masking shield 50 through a space between the lower end of the main plate 50a and the horizontal surface of the counterweight portion 77 of the frame 17 below the lower end of the main plate 50a.

The space below the masking shield 50 is open for free passage with an engine arrangement room on the left side from the masking shield 50. However, the space below the masking shield 50 is disposed in the side of a lower crankcase portion of the engine 34, which is in lower temperature compared with a cylinder head etc. in the engine 34, and the heat generated from the engine 34 goes to the upper portion within the bonnet 14, so that the space below the masking shield 50 is not influenced by the heat from the engine 34 so much. In addition, the counterweight portion 77 of the frame 17 just under the air intake 42 is thick and constructed by casting integrally with the above-mentioned mounting portion 78 and boom bracket pivotal support 79, that is, the front and rear portion of the frame 17, which are exposed outside, so that the counterweight portion 77 is small in temperature change and hard to be warmed. Moreover, a later-discussed flow of the engine cooling air on the left side of the masking shield 50 goes rearward so that an arrangement portion of the air intake 42 is separated from the flow.

Furthermore, the space above the air intake 42 is shielded from the high-temperature part of the engine 34 by the masking shield 50. In this way, air introduced into the swivel body 2 from above-mentioned air intake opening 14c is drawn into the air intake 42 in the state of being hard to be influenced by heat.

Incidentally, as shown in Fig. 20, the air intake opening 14c is opened in the bonnet on the side of the fuel tank 45 so that the outside air from the air intake opening 14c is introduced into the air intake 42 after cooling the fuel tank 45.

The air intake 42, the battery 55 above the air intake 42, and the electric equipment parts behind the battery 55, in which defects occur when they are wetted with water, are partitioned off within the bonnet 14 by the masking shield 50 as mentioned above, so that the interior of the bonnet 14 can be easily washed while avoiding arrangement portions of these parts.

The masking shield 50 functions as not only a shield but also a support which supports the closed bonnet 14 from the bottom, and provides a stopper for the bonnet 14.

As shown in Fig. 19, a buffer material (sponge) 87 is adhered to the inner surface of the bonnet 14 from the ceiling portion thereof to the front, rear, right and left side portions thereof, so that the upper end (with a marginal rubber) of the masking shield 50 is contacted with the lower surface the ceiling of the bonnet 14 through the buffer material 87 when the bonnet 14 is closed, thereby ensuring that the bonnet 14 is supported from the bottom by the masking shield 50. Besides, a lower outer periphery portion of the closed bonnet 14 is supported by being contacted with the footboard 20, the side frames 60, and the counterweight portion 77 in the rear of the frame 17.

A stay 86 is fixed to the rear portion of the bonnet 14 in the rear of the buffer material 87 in the substantially vertical direction, and to the stay 86 are bolted a pair of left and right plates 82 of a later-discussed hinge 81. Pivotal shafts 76L and 76R of an air cleaner mount 71, which is fixed to the counterweight portion 77 of the frame 17 as discussed later, are inserted into the lower portion of the respective plates 82 so that the bonnet 14 is pivotally supported by the swivel body 2. The pivotal support construction of the rear lower portion of the bonnet 14 to the swivel body 2 will be detailed later.

The bonnet 14 of the above-mentioned construction is rotated rearward in relation to the frame 17 so as to open. Incidentally, the rotation of the bonnet 14 is limited to a fixed degree by a stopper 88 interposed between the main plate 50a of the masking shield 50 and the ceiling portion of the bonnet 14.

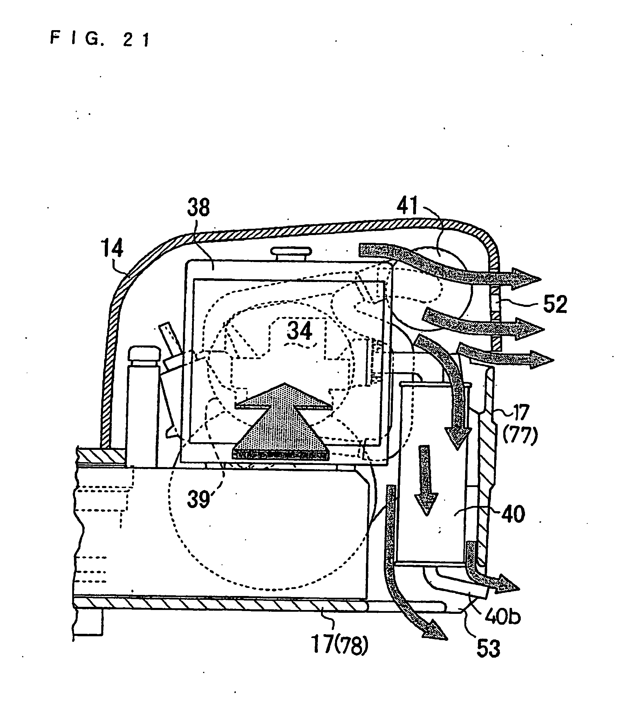

As shown in Figs. 20 and 21, in the left side of the masking shield 50, the rightward radiator air introduced from the side surface opening 14b cools the upper portion of the engine through the radiator 38, and then is exhausted from the rear end of the swivel body 2 as upper and lower two flows along the masking shield 50. The upper flow cools the air cleaner 41 provided in the upper portion behind the engine 34, and is exhausted from the rear upper opening 52 provided in the rear surface of the bonnet 14. The lower flow goes below along the inner side surface of the counterweight portion 77 of the frame 17 while cooling the muffler 40, and is exhausted from the rear lower opening 53.

Since the two openings for exhausting cooling air is provided in the rear portion of the swivel body 2, hot air does not accumulate within the swivel body 2, thereby keeping the inside of the swivel body 2 in a good state. In addition, since the openings are disposed upper and lower, the air flow in the swivel body 2 can be obtained efficiently also in the state where the drive of engine 34 is stopped. For example, in case the engine 34 is still hot such as just after stopping the engine 34 etc., while hot air flows out from the rear upper opening 52, cold air is introduced into the swivel body 2 from the rear lower opening 53 provided in the lower surface of the frame 17 (the counterweight portion 77), warmed with engine 34 again, and then exhausted from the rear upper opening 52. In this way, it is possible to introduce the engine cooling air into the swivel body 2 automatically just after the engine stop.

Explanation will now be given on the air cleaner 41 and the muffler 40 which are provided in the upper and lower positions behind the engine 34.

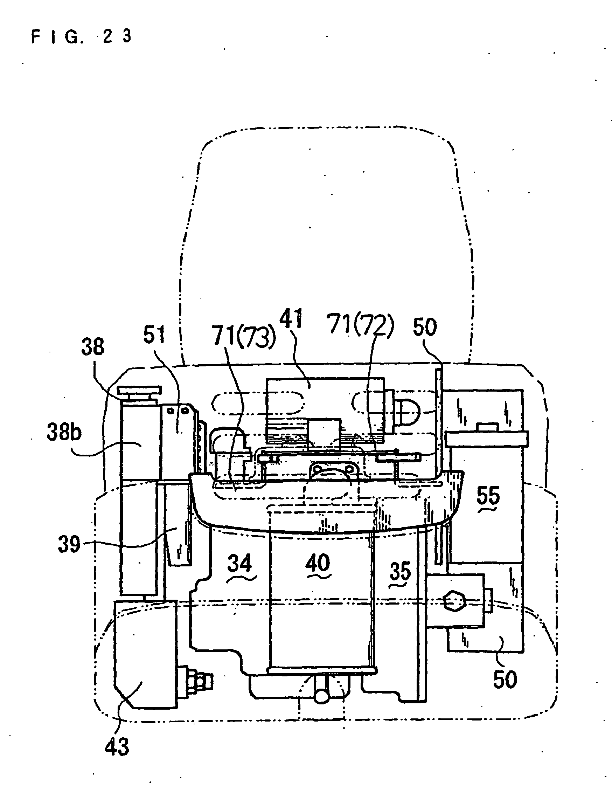

First, the arrangement structure of the muffler 40 will be explained with reference to Figs. 20-23 inclusive. The muffler 40 is constructed so that the upper end thereof is connected with an exhaust port 34b of the rear portion of the engine 34, and provided in the vertical direction along the rear end of the substantially lateral middle within the swivel body 2, while, from the lower end of the muffler 40, an exhaust port 40b faces to the outside through the rear lower opening 53 so as to exhaust air. Concretely, as shown in Fig. 21 etc., the exhaust port 40b is formed so as to be vertically extended downward, and then bent rearward in order to exhaust air in the rear direction.

The substantially lateral middle of the rear end of the swivel body 2, which is constructed by rear surfaces of the counterweight portion 77 of the frame 17 and the bonnet 14, is a portion which is able to be extended most rearwardly, and between this portion and the engine 34 is allowed the largest space in the fore-and-aft direction. This space is utilized so that the muffler 40 is disposed vertically therein in order to decrease the lateral width thereof. Moreover, a space above the muffler 40 is utilized for arrangement of the air cleaner 41.

When the muffler 40 is extended in the left-and-right direction behind the engine 34, or vertically toward either the left or right side portion, the left and right side portions of the rear end of the swivel body 2 have to be extended rearward and the horizontal distance from the swivel joint 36 thereto becomes long, thereby hindering the rearward swivel motion of the swivel body 2. The substantially lateral middle of the rear end of the swivel body 2 is a position, from which the longest distance to the engine 34 in front thereof can be ensured while the horizontal distance from the swivel joint 36 thereto is restricted short.

The muffler 40 is fixed to the engine 34, and guided in the vertical direction in the state of being surrounded by the counterweight portion 77 of the frame 17. The frame 17 including the counterweight portion 77 is constructed by casting, so that the amount of expansion of the frame 17 by heat is small. Therefore, even if the muffler 40 is provided adjacent to the inside surface of the frame 17, the frame 17 is hard to be influenced by heat from the muffler 40 and the engine 34 so that no strain occurs in any portion of the swivel body 2 and the durable swivel working vehicle can be constructed.

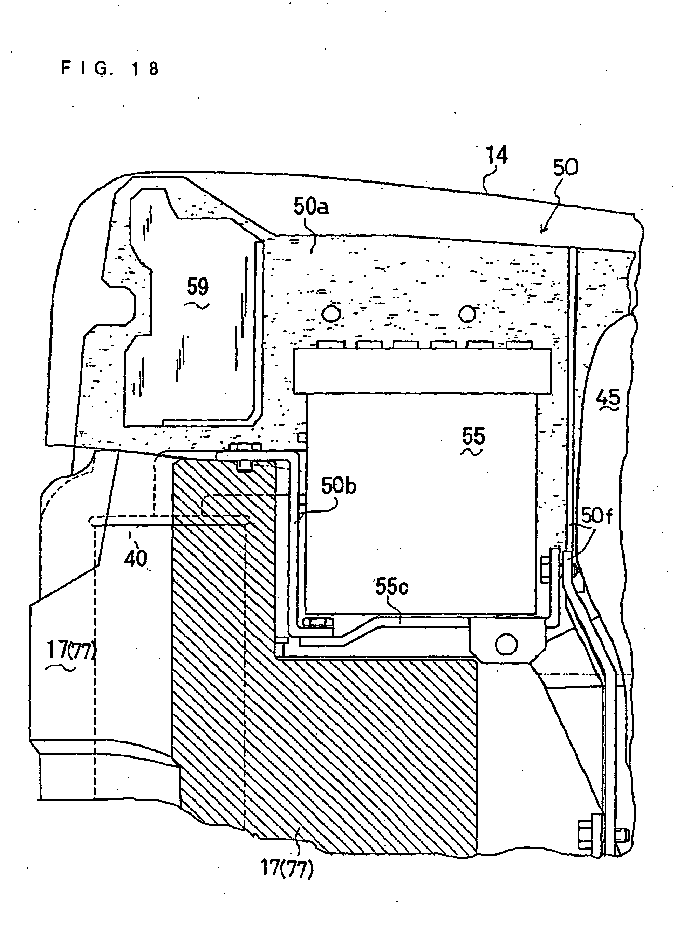

As shown in Fig. 18, the upper end of the muffler 40 is positioned below the horizontal surface of the upper end of the counterweight portion 77, and as shown in Fig. 21, the upper end of the rear lower opening 53 is positioned below the lower end of the muffler 40. Therefore, the muffler 40 is covered and protected from the upper end to the lower end thereof by the counterweight portion 77.

Since the upper end of the muffler 40 is not projected above the counterweight portion 77 in this way, the upper end of the muffler 40 is not exposed even if opening the bonnet 14, and the propagation of the exhaust sound to the outside is decreased so that the silence of the swivel working vehicle is improved.

Moreover, since the rear lower opening 53 opened downward is provided near the engine 34 and the muffler 40, the noise of the engine 34 is emitted downward so that the noise reflects, interferes, and decreases between the ground and the bottom of the swivel body 2.

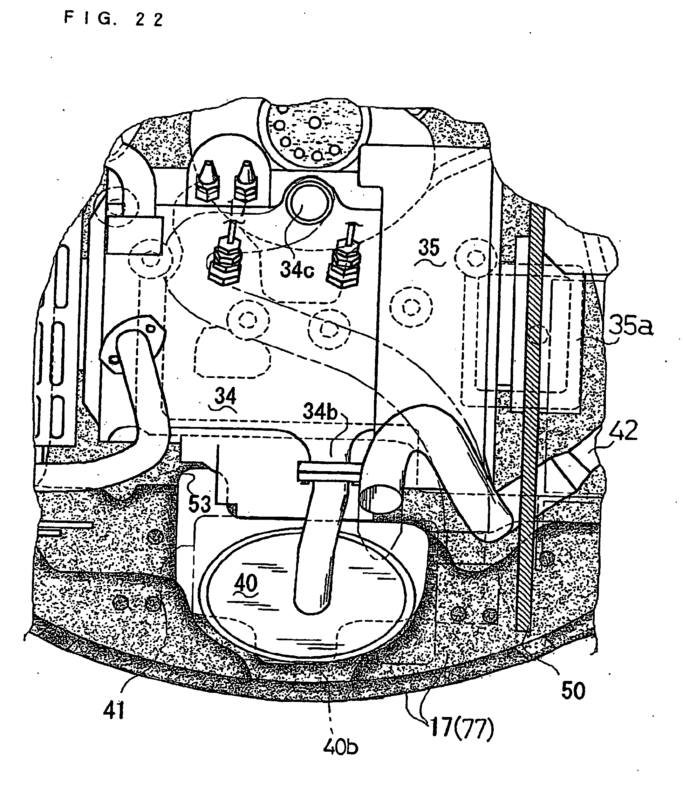

The muffler 40, as shown in Fig. 22 etc., is in an elliptical shape in plan view, and constructed such a way that the width thereof in the left-and-right direction is longer than the width thereof in the fore-and-aft direction. That is, the minor axial direction of the elliptical shape in sectional view agrees with the fore-and-aft direction thereof. In this way, it is possible to increase the capacity of the muffler 40 in the swivel body 2 with the short fore-and-aft length by forming the muffler 40 in the elliptical shape having the long left-and-right width. Whereby, while the silencing effect of the muffler 40 is improved, the amount of catalyst provided within the muffler 40 is increased so that the effect of cleaning the exhaust gas is improved.

Moreover, the rear surface of the muffler 40 is formed in the shape along the rear inner side surface of the frame 17, or the rear inner side surface of the counterweight portion 77 of the frame 17 is formed in the shape along the rear surface of the muffler 40.

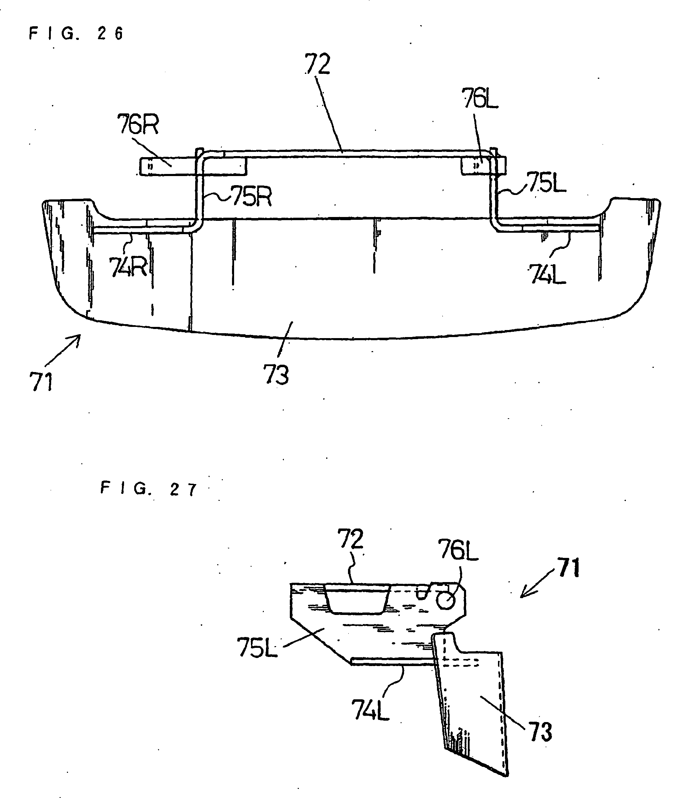

Explanation will now be given on the arrangement construction of the air cleaner 41 with reference to Figs. 14, 20, 27 etc.

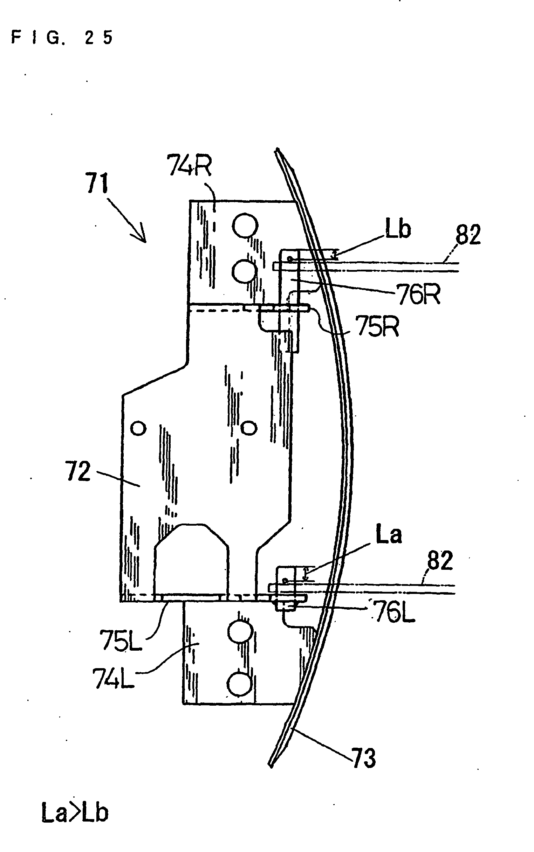

The air cleaner 41 is installed onto the air cleaner mount 71, which is fixed to the counterweight portion 77 of the frame 17 above the muffler 40 and constructed as shown in Figs. 25-27 inclusive. The air intake 42 of the air cleaner 41 provided in this way is extended toward the right side space of the masking shield 50 below the battery 55 as mentioned above so that the air introduced from the air intake 42 is cleaned and sent into the air intake 34c of the engine 34 by piping.

As shown in Figs. 25-27 inclusive, the air cleaner mount 71 is a member integrally comprising: an air cleaner mounting plate 72 in the shape of a horizontal plate; installing plates 74L and 74R which are provided in a tier lower than the air cleaner mounting plate 72 on the left and right sides of the air cleaner mounting plate 72; left and right connecting plates 75L and 75R in the shape of a vertical plate which connects the air cleaner mounting plate 72 and each of installing plates 74L and 74R; a vertical rear plate 73 which is curved in plan view and connected with both installing plates 74L and 74R; and pivotal shafts 76L and 76R which are projected in the left-and-right direction (in right direction in this embodiment) from the respective connecting plates 75L and 75R to support the bonnet 14 pivotally.

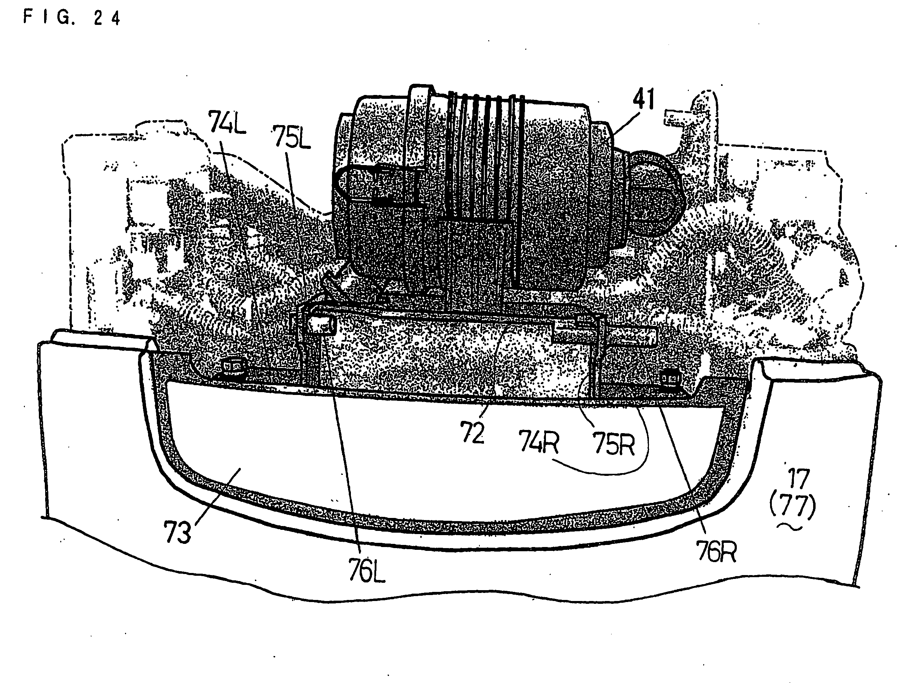

The bolt hole is drilled in each of the installing plate 74L and 74R, which are bolted to the horizontal upper end surface of the counterweight portion 77 so that the air cleaner mount 71 is fixed to the swivel body-2 stably due to the support at the opposite sides thereof. In this state, the rear plate 73 is curved in plan view with the curvature of the rear end vertical surface of the counterweight portion 77 curved in plan view, and exactly fitted into a notch formed in the upper portion of the counterweight portion 77, as shown in Figs. 24. Outside the swivel body 2 is rearward exposed the rear end surface of the rear plate 73, which may be ornamented to be in good appearance.

In this way, the air cleaner 41 is fixed to the air cleaner mounting plate 72 of the air cleaner mount 71 which is installed and fixed onto the upper portion of the counterweight portion 77.

A space between the air cleaner mounting plate 72 and the upper end horizontal surface of the counterweight portion 77 below the air cleaner mounting plate 72 is provided as an air passage which goes through the rear upper opening 52.

The muffler 40 is provided below the air cleaner mount 71 as mentioned above. However, since the air cleaner mounting plate 72 exists through the space below it between the air cleaner 41 and the muffler 40, the air cleaner 41 is isolated from the muffler 40. Furthermore, the rear surface of the rear plate 73 is exposed outside in the upper portion of the counterweight portion 77 of the frame 17, thereby ensuring that the heat can be radiated from the rear plate 73 to the outside of the swivel body 2 even if the air cleaner mount 71 is heated by the muffler 40.

The pivotal shafts 76L and 76R are respectively fitted into pin holes of a hinge part fixed to the bonnet 14 by insertion, and constructed so that the pivotal shaft 76R is longer than the pivotal shaft 76L while a outer size La from the pin hole for the pivotal shaft 76L is larger than a outer size Lb from the pin hole for the pivotal shaft 76R, thereby facilitating the installation work of the bonnet 14.

That is to say, when attaching the bonnet 14 to the air cleaner mount 71, first, the pivotal shaft 76L is positioned by being fitted into a left side pin hole 82a of the later-discussed hinge 81 by insertion, and then the bonnet 14 is slid leftward so that the left side hinge plate 82L is pressed against the left side connecting plate 75L, whereby the pivotal shaft 76R is automatically fitted into the right side pin hole 82a by insertion, thereby finishing the installation of the bonnet 14.

The bonnet 14 is provided with members into which the pivotal shafts 76b and 76c are fittingly inserted respectively. After the pivotal shaft 76b is fitted into the corresponding member and positioned to some degree, the pivotal shaft 76c is fitted into the member, thereby facilitating the connection of the bonnet 14 to a fixture, that is, the air cleaner mount 71.

Above the rear bottom end of the bonnet 14 is provided the hinge 81 of the bonnet 14 where the pivotal shafts 76L and 76R are fitted by insertion. However, since the pivotal shafts 76L and 76R are behind the air cleaner mounting plate 72, the bonnet 14 does not contact with the air cleaner mounting plate 72 and the air cleaner 41 when the bonnet 14 is connected with the pivotal shafts 76L and 76R, and the space below the air cleaner mounting plate 72 is provided as the free space where the rear bottom end of the rotating bonnet 14 rotates in the fore-and-aft direction, thereby reducing an entire space required to open and close the bonnet 14.

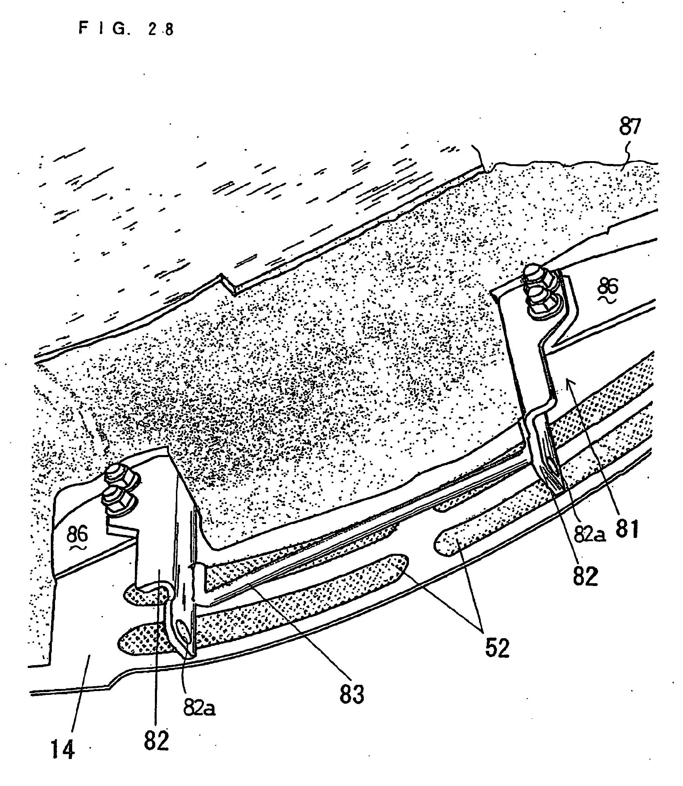

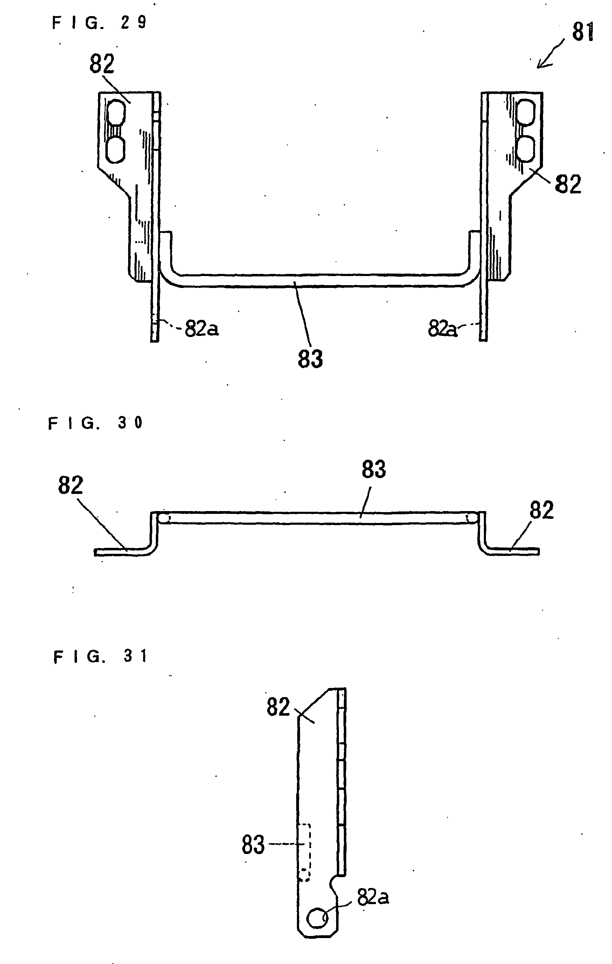

Explanation will now be given on the structure of the pivotal member (hinge) 81 with the pivotal shafts 76b and 76c in the bonnet 14 with reference to Figs. 28-31 inclusive.

The hinge 81 comprises the left and right parallel hinge plates 82, and a connecting member 83 which connects both the hinge plates 82. Each hinge plate 82 is bent in a L-like shape in plan view, and the upper portions of the left and right extending portions thereof are bolted to the stay 86 which is provided in the inner side of the rear portion of the bonnet14 as shown in Fig. 28.

The fore-and-aft extending portion of each plate 82 is vertically extended downward, and in a lower portion thereof is formed the pin hole 82a, into which the pivotal shafts 76b and 76c is fitted by insertion, thereby ensuring that the bonnet 14 is installed in the air cleaner mount 71 while the bonnet being rotatable in the fore-and-aft direction. Moreover, a beta pin or a split pin is inserted into the pivotal shafts 76b and 76c fitted in each pin hole 82a

As shown in Fig. 28, in the rear portion of the bonnet 14 is provided the rear upper opening 52, and in front of the rear upper opening 52 is disposed the lower portion of the hinge 81. The lower portion of the plate 82 of the hinge 81 is constructed so as to decrease the air resistance in the fore-and-aft direction as mentioned above, and the connecting member 83 is constructed by a round bar, thereby restricting the generation of a turbulent flow so as to ensure the smooth exhaust from the rear upper opening 52.

### Industrial Applicability of the Invention

A swivel working vehicle according to the present invention is available because it enables an operator to get on and off through both the left and right sides of a swivel body thereof due to the restriction of forward extension of a bonnet thereof, while ensuring that the swivel working vehicle enables the swivel body to perform a small circular swivel due to the restriction of lateral and rearward extension of the bonnet. Furthermore, an engine effectively weighs a rear portion of the swivel body, thereby contributing to lightening of a counterweight and reduction of costs.

## Claims

1. A swivel working vehicle, the vehicle including a swivel body (2), which is mounted horizontally swivelably on a traveling device (1) and which is provided thereon with a hydraulically-operated working system (7) and an engine (34), which is covered by a bonnet (14) and which is disposed in a rear portion of the swivel body (2), assuming that a side end of the swivel body (2) where the hydraulically-operated working system (7) is provided serves as a front end of the swivel body (2),
wherein a hydraulic oil tank (43) for the hydraulically-operated working system (7) is disposed below the lower end of the bonnet (14) along one of the left and right side ends of the swivel body (2) so that the longitudinal direction of the hydraulic oil tank (43) agrees with the fore-and-aft direction of the swivel body (2), and
wherein a rearmost portion of the rear portion of the swivel body (2) is formed arcuately in plan view;
**characterized in that**
a muffler (40) of the engine (34) is disposed vertically in the substantially lateral middle of the rearmost portion of the rear portion of the swivel body (2).

2. The swivel working vehicle as set forth in claim 1, wherein the rear surface of the muffler (40) is shaped along an inner side of the rearmost portion of the rear portion of the swivel body (2) which is arcuate in plan view.

3. The swivel working vehicle as set forth in claim 1 or 2, wherein the muffler (40) is elliptical in cross section and is provided so that a minor axis of the sectional ellipse shape of the muffler (40) agrees with the fore-and-aft direction of the swivel body (2).

4. The swivel working vehicle as set forth in any of claims 1 to 3, wherein the whole muffler (40) is provided within a counterweight (77) mounted upright on the rear portion of the swivel body (2).

5. The swivel working vehicle as set forth in any of claims 1 to 4, wherein an air port (53) for engine cooling air is formed in the swivel body (2) below the muffler (40).

6. The swivel working vehicle as set forth in any of claims 1 to 5, wherein an air cleaner mount (71) for fixture of an air cleaner (41) for the engine (34) is fixed to the upper end of a rear portion of the counterweight (77) mounted upright on the rear portion of the swivel body (2).

7. The swivel working vehicle as set forth in claim 6, wherein the air cleaner mount (71) is provided above the engine muffler (40), and the air cleaner (41) is installed on the air cleaner mount (71).

8. The swivel working vehicle as set forth in claim 6 or 7, wherein the air cleaner mount (71) is provided with a pivotal bonnet support (76R,76L) which provides to vertically rotate the bonnet (14).

9. The swivel working vehicle as set forth in claim 8, wherein the bonnet (14) is fixedly provided with a pivotal portion (81) to be pivotally supported on the air cleaner (41), and wherein the pivotal portion (81) of the bonnet (14) is higher than the rear bottom end of the bonnet (14) so as to provide a free space under the air cleaner (41) mounted on the air cleaner mount (71) for rotation of the rear bottom end of the rotating bonnet (14).

10. The swivel working vehicle as set forth in claim 9, wherein the air cleaner mount (71) has a first horizontal plate (74R,74L) for attaching the air cleaner mount (71) to the counterweight (77), and a second horizontal plate (72) for attaching the air cleaner (41) to the air cleaner mount (71) at the lateral center of the first horizontal plate (74R,74L) in a tier higher than the first horizontal plate (74R,74L), so that the space below the second horizontal plate (72) is provided as the free space for rotation of the bottom end of the rear portion of the bonnet (14).

11. The swivel working vehicle as set forth in claim 10, wherein left and right pivotal shafts (76R,76L) for pivotally supporting the bonnet (14) are extended above the first horizontal plate (74R, 74L) laterally from both left and right ends of the second horizontal plate (72) respective so as to serve as the pivotal bonnet support of the air cleaner mount (71).

12. The swivel working vehicle as set forth in any of claims 6 to 11, wherein a vertical plate (73) curved arcuately in plan view is provided in the air cleaner mount (71) so as to fit into the rear end surface of the counterweight (77).

## Patentansprüche

1. Ein drehbares Arbeitsfahrzeug, wobei das Fahrzeug einen Drehkörper (2) umfasst, der horizontal dreh- bzw. schwenkbar auf einer Fahrvorrichtung (1) angebracht ist und an dem ein hydraulisch betätigtes Arbeitssystem (7) und ein Motor (34) vorgesehen ist, der durch eine Haube (14) abgedeckt ist und der in einem hinteren Abschnitt des Drehkörpers (2) angeordnet ist, unter der Annahme, dass ein Seitenende des Drehkörpers (2), an dem das hydraulisch betätigte Arbeitssystem (7) vorgesehen ist, als ein vorderes Ende des Drehkörpers (2) dient,
wobei ein hydraulischer Öltank (43) für das hydraulisch betätigte Arbeitssystem (7) unter dem unteren Ende der Haube (14) entlang einer der linken und rechten Seitenenden des Drehkörpers (2) so angeordnet ist, dass die Longitudinalrichtung des hydraulischen Öltanks (43) mit der Längsrichtung des Drehkörpers (2) übereinstimmt, und
wobei ein hinterster Abschnitt des hinteren Abschnitts des Drehkörpers (2) in der Draufsicht bogenförmig ausgebildet ist,
**dadurch gekennzeichnet, dass**
ein Abluftschalldämpfer (40) des Motors (34) vertikal in der im wesentlichen lateralen Mitte des hintersten Abschnitts des hinteren Abschnitts des Drehkörpers (2) angeordnet ist.

2. Das drehbare Arbeitsfahrzeug gemäß Anspruch 1, wobei die hintere Oberfläche des Abluftschalldämpfers (40) entlang einer Innenseite des hintersten Abschnitts des hinteren Abschnitts des Drehkörpers (2), der in Draufsicht bogenförmig ist, geformt ist.

3. Das drehbare Arbeitsfahrzeug gemäß Anspruch 1 oder 2, wobei der Abluftschalldämpfer (40) elliptisch im Querschnitt ist und so vorgesehen ist, dass eine kürzere Achse der im Schnitt elliptischen Form des Abluftschalldämpfers (40) mit der Längsrichtung des Drehkörpers (2) übereinstimmt.

4. Das drehbare Arbeitsfahrzeug gemäß einem der Ansprüche 1 bis 3, wobei der gesamte Abluftschalldämpfer (40) in einem Gegengewicht (77) vorgesehen ist, das aufrecht an dem hinteren Abschnitt des Drehkörpers (2) angebracht ist.

5. Das drehbare Arbeitsfahrzeug gemäß einem der Ansprüche 1 bis 4, wobei eine Luftmündung (53) für Motor-Kühlluft in dem Drehkörper (2) unter dem Abluftschalldämpfer (40) ausgebildet ist.

6. Das drehbare Arbeitsfahrzeug gemäß einem der Ansprüche 1 bis 5, wobei eine Luftreinigerbefestigung (71) zur Anbringung eines Luftreinigers (41) für den Motor (34) an dem oberen Ende eines hinteren Abschnitts des Gegengewichts (77), das aufrecht an dem hinteren Abschnitt des Drehkörpers (2) angebracht ist, befestigt ist.

7. Das drehbare Arbeitsfahrzeug gemäß Anspruch 6, wobei die Luftreinigerbefestigung (71) über dem Motor-Abluftschalldämpfer (40) vorgesehen ist, und der Luftreiniger (41) an der Luftreinigerbefestigung (71) installiert ist.

8. Das drehbare Arbeitsfahrzeug gemäß Anspruch 6 oder 7, wobei die Luftreinigerbefestigung (71) mit einer Schwenk-Haubenhalterung (76R,76L) versehen ist, die eine vertikale Drehung der Haube (14) ermöglicht.

9. Das drehbare Arbeitsfahrzeug gemäß Anspruch 8, wobei die Haube (14) fest mit einem Schwenkabschnitt (81) versehen ist, der schwenkbar an dem Luftreiniger (41) zu halten ist, und wobei der Schwenkabschnitt (81) der Haube (14) höher liegt als das hintere untere Ende der Haube (14), damit ein freier Raum unter dem Luftreiniger (41), der an der Luftreinigerbefestigung (71) angebracht ist für eine Drehung des hinteren unteren Endes der drehenden Haube (14) vorgesehen ist.

10. Das drehbare Arbeitsfahrzeug gemäß Anspruch 9, wobei die Luftreinigerbefestigung (71) eine erste horizontale Platte (74R,74L) zum Anbringen der Luftreinigerbefestigung (71) an dem Gegengewicht (77), und eine zweite horizontale Platte (72) zum Anbringen des Luftreinigers (41) an der Luftreinigerbefestigung (71) an der lateralen Mitte der ersten horizontalen Platte (74R,74L) in einer Lage höher als die erste horizontale Platte (74R,74L) aufweist, so dass der Raum unter der zweiten horizontalen Platte (72) als der freie Raum zur Drehung des unteren Endes des hinteren Abschnitts der Haube (14) vorgesehen ist.

11. Das drehbare Arbeitsfahrzeug gemäß Anspruch 10, wobei linke und rechte Schwenkachsen (76R,76L) zum schwenkbaren Halten der Haube (14) über die erste horizontale Platte (74R,74L) lateral von beiden linken bzw. rechten Enden der zweiten horizontalen Platte (72) erstreckt sind, um als die schwenkbare Haubenhalterung der Luftreinigerbefestigung zu dienen.

12. Das drehbare Arbeitsfahrzeug gemäß einem der Ansprüche 6 bis 11, wobei eine vertikale Platte (73), die in Draufsicht bogenförmig gekrümmt ist, in der Luftreinigerbefestigung (71) so vorgesehen ist, dass sie in die hintere Endoberfläche des Gegengewichts (77) passt.

## Revendications

1. Engin de chantier pivotant, l'engin incluant un corps de pivot (2), qui est monté horizontalement et de façon pivotante sur un dispositif de déplacement (1) et sur lequel est placé un système de fonctionnement hydraulique (7) et un moteur (34) qui est couvert par un capot (14) et qui est disposé dans une portion arrière du corps de pivot (2), en partant du principe qu'une extrémité latérale du corps de pivot (2) où le système de fonctionnement hydraulique (7) est placé sert d'extrémité avant au corps de pivot (2),
dans lequel un réservoir d'huile hydraulique (43) pour le système de fonctionnement hydraulique (7) est disposé sous l'extrémité inférieure du capot (14) le long de l'une des extrémités latérales gauche et droite du corps de pivot (2) de sorte que la direction longitudinale du réservoir d'huile hydraulique (43) correspond à la direction avant-arrière du corps de pivot (2), et
dans lequel une partie la plus en arrière de la portion arrière du corps de pivot (2) est formée de façon arquée en vue en plan ;
**caractérisé en ce que**
un pot d'échappement (40) du moteur (34) est disposé verticalement dans le milieu sensiblement latéral de la partie la plus en arrière de la portion arrière du corps de pivot (2).

2. Engin de chantier pivotant selon la revendication 1, dans lequel la surface arrière du pot d'échappement (40) est formée le long d'un côté interne
de la partie la plus en arrière de la portion arrière du corps de pivot (2) qui est arquée en vue en plan.

3. Engin de chantier à moteur selon la revendication 1 ou 2, dans lequel le pot d'échappement (40) présente une coupe transversale elliptique et est placé de sorte qu'un petit axe de la forme d'ellipse en coupe du pot d'échappement (40) correspond à la direction avant-arrière du corps de pivot (2).

4. Engin de chantier pivotant selon l'une quelconque des revendications 1 à 3, dans lequel l'ensemble de pot d'échappement (40) est placé dans un contrepoids (77) monté verticalement sur la portion arrière du corps de pivot (2).

5. Engin de chantier pivotant selon l'une quelconque des revendications 1 à 4, dans lequel une lumière d'air (53) pour l'air de refroidissement de moteur est formée dans le corps de pivot (2) sous le pot d'échappement (40).

6. Engin de chantier pivotant selon l'une quelconque des revendications 1 à 5, dans lequel un montant de filtre à air (71) pour la fixation d'un filtre à air (41) pour le moteur (34) est fixé à l'extrémité supérieure d'une portion arrière du contrepoids (77) monté verticalement sur la portion arrière du corps de pivot (2).

7. Engin de chantier pivotant selon la revendication 6, dans lequel le montant de filtre à air (71) est placé au-dessus du pot d'échappement de moteur (40), et le filtre à air (41) est installé sur le montant de filtre à air (71).

8. Engin de chantier pivotant selon la revendication 6 ou 7, dans lequel le montant de filtre à air (71) est pourvu d'un support de capot pivotant (76R, 76L) qui assure une rotation verticale du capot (14).

9. Engin de chantier pivotant selon la revendication 8, dans lequel le capot (14) est pourvu fixement d'une portion pivotante (81) pour être supporté de façon pivotante sur le filtre à air (41), et dans lequel la portion pivotante (81) du capot (14) est plus élevée que l'extrémité de base arrière du capot (14) de sorte à créer un espace libre sous le filtre à air (41) monté sur le montant de filtre à air (71) pour une rotation de l'extrémité de base arrière du capot rotatif (14).

10. Engin de chantier pivotant selon la revendication 9, dans lequel le montant de filtre à air (71) comporte une première plaque horizontale (74R, 74L) pour fixer le montant de filtre à air (71) au contrepoids (77), et une seconde plaque horizontale (72) pour fixer le filtre à air (41) au montant de filtre à air (71) au niveau du centre latéral de la première plaque horizontale (74R, 74L) dans un étage plus élevé que la première plaque horizontale (74R, 74L), de sorte que l'espace sous la seconde plaque horizontale (72) est formé comme l'espace libre pour rotation de l'extrémité de base de la portion arrière du capot (14).

11. Engin de chantier pivotant selon la revendication 10, dans lequel des axes pivotants gauche et droit (76R, 76L) pour supporter de façon pivotante
le capot (14) sont étendus au-dessus de la première plaque horizontale (74R, 74L) latéralement par rapport aux extrémités gauche et droite de la seconde plaque horizontale (72) respective pour servir de support de capot pivotant du montant de filtre à air (71).

12. Engin de chantier pivotant selon l'une quelconque des revendications 6 à 11, dans lequel une plaque verticale (73) arquée en vue en plan est disposée dans le montant de filtre à air (71) de façon à s'ajuster dans la surface d'extrémité arrière du contrepoids (77).
